# EUROPEAN PATENT SPECIFICATION

(11) **EP 3 912 326 B1**
(45) Date of publication and mention of the grant of the patent: **22.05.2024**
(21) Application number: 19700785.9
(22) Date of filing: 14.01.2019
(51) Int. Cl.: H04W 4/46, H04W 4/40, H04W 40/12, H04W 88/04

(54) **VEHICLE-TO-VEHICLE AND VEHICLE-TO-NETWORK COMMUNICATION**
FAHRZEUG-ZU-FAHRZEUG- UND FAHRZEUG-ZU-NETZWERK-KOMMUNIKATION
COMMUNICATION DE VÉHICULE À VÉHICULE ET DE VÉHICULE À RÉSEAU

(43) Date of publication of application: 24.11.2021
(73) Proprietor: Nokia Technologies Oy, 02610 Espoo (FI)
(72) Inventor: SZILÁGYI, Péter, 1083 Budapest (HU)
(74) Representative: Novagraaf Technologies
(86) International application number: PCT/EP2019/050777
(87) International publication number: WO 2020/147916

(56) References cited:
- WO-A1-2018/113947

## Description

### BACKGROUND

Vehicle-to-everything communication may include a vehicle communicating data to another communication station, such as another vehicle, so that the vehicle and all communication stations may be informed about each other's position, dynamics and attributes. In addition to other vehicles, the communication stations may include any entity that is configured with communication station equipment capable of communicating with the vehicle. Examples of entities that may be configured with communication station equipment includes bicycles, pedestrians, and other roadside units (e.g., road signs, traffic lights, barriers, and gates). Improvements to road safety, among other use cases, can be realized based on the communication stations' awareness of each other's position, dynamics and attributes. For example, based on the position, dynamics and attributes of other communication stations, a vehicle (or one of the other communication stations) may raise safety warnings or alerts. Examples of the warnings or alerts include emergency vehicle warnings, slow vehicle warnings, wrong-way driving warning, lane change warnings, and the like. Some additional examples of the warnings or alerts can be found in European Telecommunications Standards Institute (ETSI) TR 102 638, which describes features of an intelligent transport system that includes vehicular communication. Vehicle-to-everything technology continues to be developed and improved.

WO 2018/113947 A1 is directed to a method for configuring routing of messages in a communication network. The method includes obtaining channel quality measurement data of an intelligent traffic system (ITS) sidelink, determining a sidelink status based on the obtained channel quality measurement data of the ITS sidelink, and configuring a message routing scheme based on the determined sidelink status.

### BRIEF SUMMARY

The invention is defined by the subject matter of the independent claims. Advantageous enhancements are subject to the dependent claims.

Providing reliable and timely vehicle-to-everything communications between the communication stations is challenging, but would improve the performance of an intelligent transport system. To address one or more of the challenges, aspects described herein relate to various methods, systems and apparatuses that can be used to determine and disseminate vehicle-to-everything quality of service measurements. For example, one or more vehicle-to-everything quality of service measurements may be determined based on vehicle-to-network communication or vehicle-to-vehicle communication of vehicle-to-everything messages. The dissemination of the vehicle-to-everything quality of service measurements may include the sending of various versions of a vehicle-to-everything message such that the communication stations and a server are informed of the measurements.

For example, a server may receive, from a first communication station, a vehicle-to-everything message. The server may determine, based on the vehicle-to-everything message, one or more vehicle-to-everything quality of server measurements. The server may determine a second communication station to forward the vehicle-to-everything message. The server may generate a forwarded version of the vehicle-to-everything message. The server may send, to the second communication station, the forwarded version of the vehicle-to-everything message. The forwarded version of the vehicle-to-everything message may information the second communication station of at least one vehicle-to-everything quality-of-service measurement. The server may generate a returned version of the vehicle-to-everything message. Further, the server may send, to the first communication station, the returned version of the vehicle-to-everything message. The returned version of the vehicle-to-everything message may information the first communication station of at least one vehicle-to-everything quality-of-service measurement.

Additional aspects may relate to enabling or disabling vehicle-to-network message forwarding between two communication stations. For example, based on a determination that a QoS target is satisfied, a server may store an indication that vehicle-to-network message forwarding is enabled between the first communication station and the second communication station. Based on the vehicle-to-network message forwarding being enabled, a V2X message may be sent between the first communication station and the second communication station based on a vehicle-to-network communication.

### BRIEF DESCRIPTION OF THE DRAWINGS

Some example embodiments are illustrated by way of example and not limited in the accompanying figures in which like reference numerals indicate similar elements and in which:
Fig. 1 shows an example block diagram of a system for vehicle-to-everything communication.
Fig. 2 shows an example block diagram that includes an example of an unreliable or slow vehicle-to-vehicle communication link and an example of vehicle-to-everything message forwarding using vehicle-to-network communications.
Figs. 3A-3C shows an example flow for determining and disseminating vehicle-to-everything quality-of-service measurements based on vehicle-to-network communication.
Fig. 4 shows an example method for a server processing a vehicle-to-everything message based on vehicle-to-network communication.
Fig. 5A shows an example method for a communication station sending one or more vehicle-to-everything messages that include vehicle-to-everything quality-of-service measurements determined based on vehicle-to-vehicle communication.
Fig. 5B shows an example method for a communication station receiving and processing a vehicle-to-everything message that includes vehicle-to-everything quality-of-service measurements determined based on vehicle-to-vehicle communication.
Fig. 6 shows an example method for a server receiving and processing a vehicle-to-everything message that includes vehicle-to-everything quality-of-service measurements determined based on vehicle-to-vehicle communication.
Fig. 7 shows an example apparatus that may be used in an environment described herein or used to implement one or more aspects described herein.

### DETAILED DESCRIPTION

In the following description of various illustrative embodiments, reference is made to the accompanying drawings, which form a part hereof, and in which are shown by way of illustration various embodiments in which the invention may be practiced. It is to be understood that other embodiments may be utilized and structural and functional modifications may be made without departing from the scope of the present invention.

Vehicle-to-everything (V2X) technology continues to be developed and improved. For example, ETSI has published documentation that defines an intelligent transport system for vehicle-to-everything communication. Examples of the documentation include TS 102 637-1, which includes examples of functional requirements; EN 302 637-2, which includes features related to a Cooperative Awareness Basic Service; and EN 302 637-3, which includes features related to a Decentralized Environmental Notification Basic Service. The Cooperative Awareness Basic Service enables communication stations (e.g., vehicles, bicycles, pedestrians, and roadside infrastructure equipment) to exchange status information with each other in real-time. A communication station may encode its status information (e.g. position, speed, direction) into a V2X message such as, for example, a Cooperative Awareness Message (CAM) or a Distributed Environmental Notification Message (DENM). A standardized CAM, and other V2X message types, can be found in ETSI TS 102 894-2.

Due to the nature of moving vehicles and roadway travel, the status information may be situational, dynamic, and volatile. If the status information is communicated slowly or unreliably, the communication stations may be operating under out-of-date information, which can negatively impact the performance of an intelligent transport system. For example, two vehicle may be driving along a roadway with one behind the other. The first, lead, vehicle may apply brakes in an emergency situation that quickly deaccelerates the first vehicle. The second, trailing, vehicle may, due to failed communication from the first vehicle, be operating with out-of-date status information for the first vehicle. The first vehicle may be unaware that its status information is not being received by the second vehicle. Due to the braking of the first vehicle, the two vehicles may be at an unsafe distance from each other and a warning should be triggered. However, due to the out-of-date status information, the second vehicle may be incorrectly determining that the first vehicle remains at a safe distance.

Providing reliable and timely communication of the status information, or other information included in a V2X message, between the communication stations is challenging, but would improve the performance of an intelligent transport system (ITS). For example, some ITSs have established communication targets for the status information (e.g., 100 millisecond end-to-end delay for CAM; 20 millisecond end-to-end delay for DENM; 99.95% reliability; 10⁻⁵ packet loss rate), but the ITSs may lack the ability to determine whether those targets are being achieved. In other words, an ITS may be unable to determine the quality of a V2X communication link and may lack the ability to make communication stations, which process V2X messages, aware of the determined quality. Quality of a V2X communication link may be indicated by measurements of latency, packet loss, one-way delay, round-trip time (RTT), and other measurements of timeliness and reliability. Additionally, determining quality of a V2X communication link may be challenging because no single device may be able to determine quality on all V2X links (e.g., a first vehicle may be unable to determine quality of a V2X communication link between a second and a third vehicle; a central server may, without assistance from another device, be unable to monitor the reliability or speed messages sent to a vehicle). Further, determining quality of V2X communication links may be challenging because there may be multiple hops per V2X message and determining an end-to-end delay may be beneficial.

To address some of the challenges of providing reliable and timely communication of V2X messages, devices of an ITS may be configured to perform processes that determine V2X quality of service (QoS) information. The examples discussed throughout this disclosure will include examples where V2X QoS information is determined based on vehicle-to-vehicle (V2V) communications and based on vehicle-to-network (V2N) communications. V2V communication may include the communication of V2X messages, such as a CAM, between two communication stations, such as two vehicles. V2N communication may include the communication of V2X messages, via a network node, to and/or from one or more communication stations. A network node, for example, may include a server in communication with a cellular network. The cellular network may be in communication with the one or more communication stations. While V2N and V2V communications are discussed throughout the specification, the examples are not intended to be limited to vehicles. A vehicle is one type of communication station and V2V communication refers to communication that is between communication stations. V2N communication refers to communication that is between a communication station and a network device, such as a server. V2V communication could be interchangeably referred to aa station-to-station communication. V2N communication could be interchangeable referred to as station-to-network communication. Similarly, a V2X message could be interchangeably referred to as a station-to-everything message.

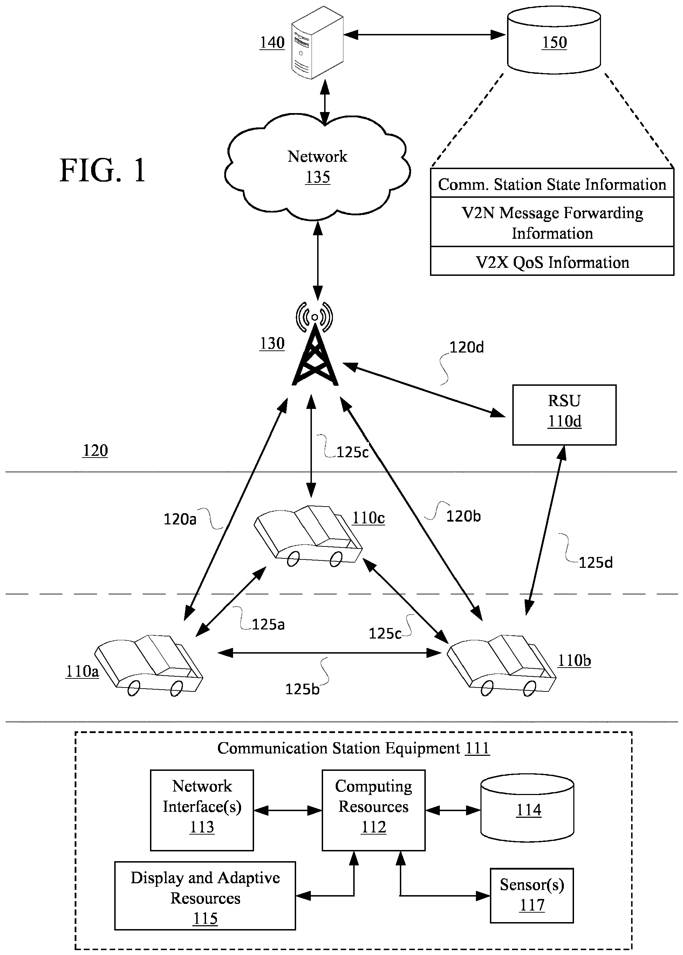

Fig. 1 shows an example block diagram of a system for V2X communication. Fig. 1 depicts four example communication stations 110a-110d. Included in the example communication stations 110a-110d are three vehicles (e.g., 110a-110c), and roadside unit (e.g., 110d). The roadside unit (RSU) may be a traffic light, a road sign, or some other infrastructure element capable of V2X communication. The example communication stations 110a-110d provide only one example of the types and numbers of communication stations. Other vehicles, roadside infrastructure equipment, and communication stations (e.g., pedestrians, bicycles, etc.) could be involved in V2X communication. Communication stations 110a-110d may be interchangeably referred to by their specific type of communication station (e.g., vehicles 110a-110c is are equivalent labels for communication stations 1 10a-1 10c; and RSU 110d is an equivalent label for communication station 110d).

Vehicles 110a-110c may be traveling along road 120 and the RSU 110d may be located at a position along the road 120. Vehicles 110a-110c and the RSU 110d may, based on V2V communication links 125a-125d, be able to send V2X messages, such as CAM or DENM, in an attempt to communicate with each other and/or with the roadside infrastructure equipment 110d. The V2V communication links 125a-125d may be proximity-based (e.g., via short-range broadcasts) such that the vehicles 110a-110c and the RSU 110d may receive a V2X message via the V2V communication links 125a-125d only if they are within a certain distance from the source of the V2X message (e.g., roadside infrastructure equipment 110d may not be able to receive a V2X message from vehicle 110a based on the distance between them). The V2V communication links 125a-125d may be based on an ITS standard including, for example, an ITS-G5/802.11p standard. The V2V communication links 125a-125d may be based on an 3GPP Long Term Evolution (LTE) side-link or a New Radio (NR) side-link standard. V2V communication links 125a-125d provide examples of V2X links.

Vehicles 110a-110c and the RSU 110d may, based on V2N communication links 120a-120d, be able to send V2X messages in an attempt to communicate with each other. In this way, the V2X message may be sent, from a vehicle (e.g., any one of vehicle 110a-110c) or other communication station (e.g., RSU 110d), to a radio access network (RAN) equipment 130. The RAN equipment 130 may be configured to operate as a base transceiver station (BTS) or an access point of a RAN network. The RAN equipment 130 may be configured to communicate wirelessly with nearby devices including, for example, one or more communication stations (e.g., 110a-110d) and user equipment (e.g., mobile and cellular phones, which are not shown in Fig. 1). The wireless communication with the RAN equipment 130 may be performed according to a wireless standard (e.g., third generation (3G), fourth generation (4G), or fifth generation (5G) mobile telecommunications technology). For simplicity, the examples described throughout this disclosure will be discussed in terms of 5G mobile telecommunications technology. V2N communication links 120a-120d provide examples of V2X links.

Once received by the RAN equipment 130, the V2X message may be sent to a network node via network 135. As depicted in FIG. 1, the network node may be a server 140. The network 135 may include one or more networks including, for example, the RAN network, a core network operated by the provider of the RAN network, the Internet, or some other wide-area network. Upon receipt of the V2X message, the server 140, among other processes that will be discussed below, may determine which communication station is to receive the V2X message (e.g., based on information stored by database 150, which will be discussed below in greater detail) and may forward the V2X message along the appropriate communication path. For example, as part of being forwarded along the appropriate communication path, the V2X message may be sent from the server 140, routed via network 135, received by the RAN equipment 130 (or some other RAN equipment), and sent to the appropriate communication station from the RAN equipment 130 via a wireless communication (e.g., via links 125a-125d).

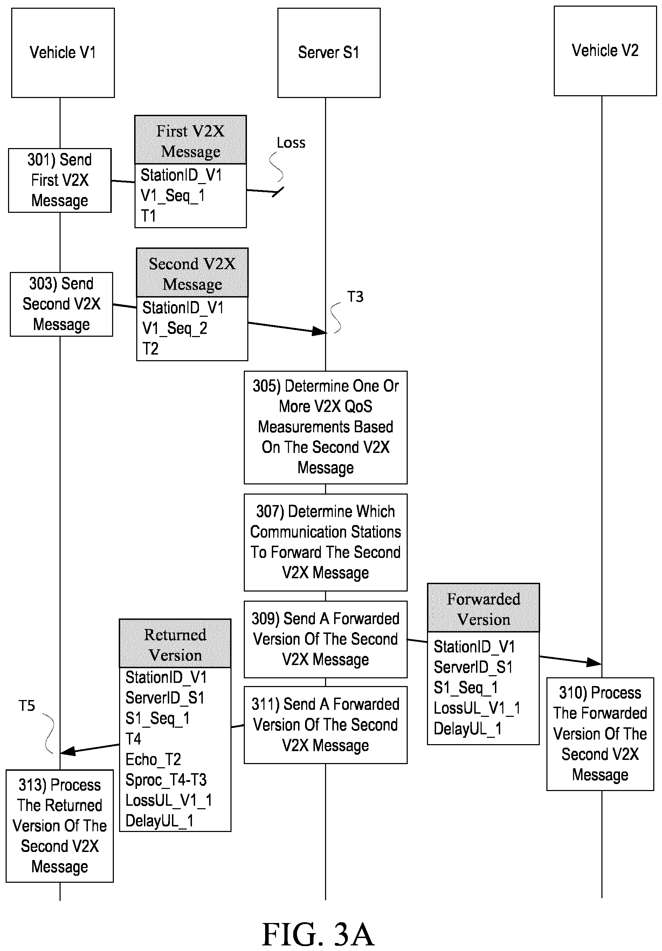

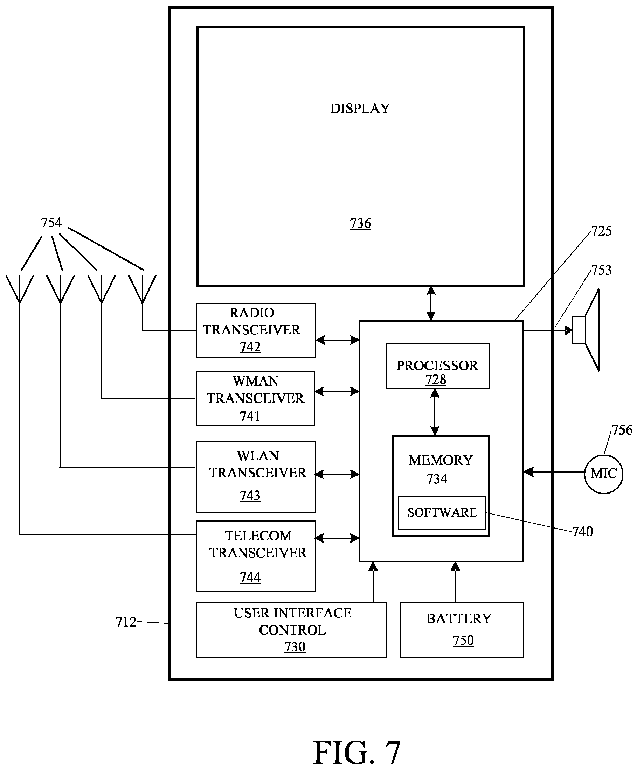

To allow for the transport of V2X messages over the V2N communication links 120a-120d and the V2V communication links 125a-125d, each communication station 110a-110d may include communication station equipment 111. Computing resources 112 may include physical computing resources such as one or more computer processors and other hardware components. Fig. 7, which is discussed below, provides an example of some of the components that may form a part of the computing resources 112. The computing resources 112 may be in communication with one or more network interfaces 113, a database 114, one or more display and adaptive resources 115, and one or more sensors 117. The computing resources 112 may be configured to, among other things, communicate data to/from the other components of the communication station equipment 111 (e.g., receive data from the one or more sensors 117 or the database 114; send one or more commands to the display and adaptive resources 115; cause data to be stored in the database 114); process any data received from the other components (e.g., process sensor data received from the one or more sensors 117); generate V2X messages (e.g., generate a CAM); generating status information for a communication station (e.g., position, speed, direction); and the like. The configured functions of the computing resources 112 will be apparent based on the discussion of the other components of the communication station 111 and the examples discussed throughout this disclosure that relate to a communication station. As a particular example, the computing resources 112 may be able to perform the features and/or methods discussed in connection with FIGs. 3A-3C, 4, 5A-5B and 6.

The one or more network interfaces 113 may be configured to transmit and receive V2X messages via V2V communication links 125a-125d and/or via V2N communication links 120a-120d. For example, for V2V communication links 125a-125d, the one or more network interfaces 113 may include a V2V network interface such an ITS-G5/802.11p communication interface. The V2V network interface may be configured to communicate with nearby communication stations (e.g., via a short-range broadcast). The V2V network interface may be configured to tune to one or more broadcast frequencies for V2V communication links 125a-125d. For V2N communication links 120a-120d, the one or more network interfaces may include a V2N interface such as a cellular vehicle-to-everything (C-V2X) communication interface or a Third Generation Partnership Project (3GPP) Uu interface. The V2N interface may be configured to communicate with the RAN equipment 130 and may be configured to send and receive data according to a wireless standard. If the communication station equipment 111 includes both a V2N network interface and a V2V network interface, the communication station equipment 111 may be configured to send each V2X message over both interfaces. In this way, the V2V interface may be used to send a V2X message and the V2N interface may be used to send a copy of the V2X message to the server 140. Other communication stations may receive one or both of the V2X messages. Alternatively, if the communication station equipment 111 includes both a V2N network interface and a V2V network interface, the communication station equipment 111 may be configured to selectively operate in a V2V mode and/or a V2N mode. In the V2V mode, V2X messages may be transmitted using the V2V network interface. In the V2V mode, other communication stations may receive the V2X message directly from another communication station. In the V2N mode, V2X messages may be transmitted using the V2N network interface. In the V2N mode, other communication stations may receive the V2X message indirectly from another communication station and via the server 140.

The one or more sensors 117 may be configured to gather data of the communication station and/or the communication station's environment. Examples of the types of sensors include radar sensors, lidar sensors, cameras, speedometers, global positioning equipment, and the like. The gathered data may form a basis for the status information of the communication station. Status information may include, among other indication of station status, a position of the communication station, a speed of the communication station, and a direction of the communication station.

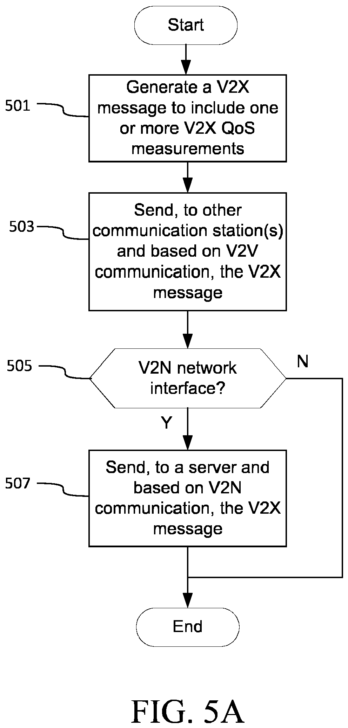

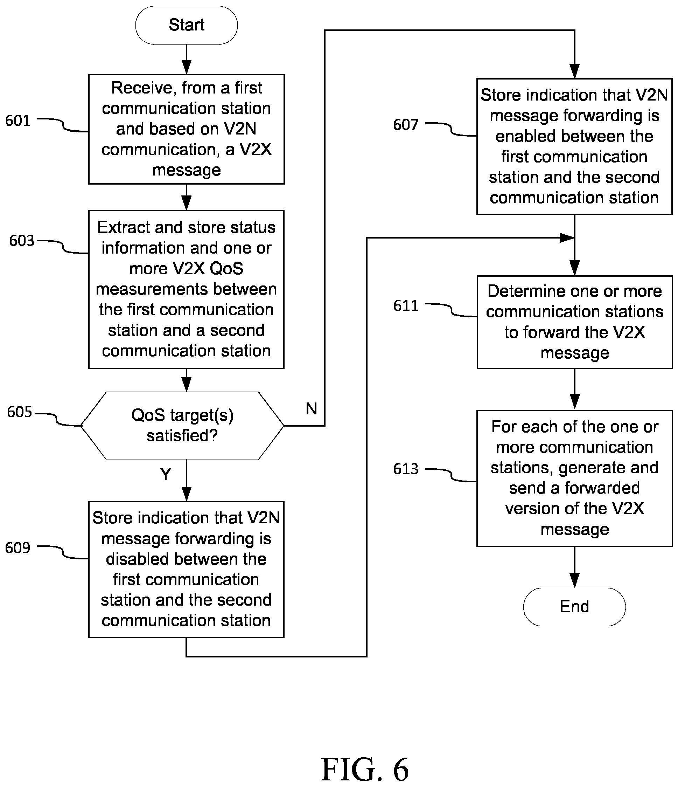

The database 114 may store data associated with V2X communications. For example, the database 114 may include data gathered from the sensors 117 (referred interchangeably as sensor data); data resulting from the processing of the sensor data (e.g., indications of detected objects, current speed of the communication station); a record of status information for the communication station (e.g., a record indicating current status information for sending in a subsequent V2X message); and a history of V2X messages sent and/or received by the communication station. The database 114 may further include a record of V2X quality of service (QoS) information for each of the communication stations 110a-110d. For example, the database 114 of a communication station (e.g., vehicle 110a) may include, for each of communication stations 110a-110d, V2X QoS information such as latency, packet loss, one-way delay, RTT, or other indication of V2X link quality for the communication stations 110a-110d. The V2X QoS information may have been extracted from a V2X message received by the communication station (e.g., a V2X message received from the server 140 or another communication station) or may have been determined by the communication station itself. Examples of V2X QoS information that may be determined by a communication station (e.g., 110a-110d) will be discussed in connection with Figs. 5A-5B and 6.

The display and adaptive resources 115 may include equipment configured to generate warnings or alerts, and/or cause the communication station to adapt its operation. The display and adaptive resources 115 may be configured to respond to commands received from the computing resources 112. The commands may be generated based on V2X communications sent or received by the communication station. For example, the display and adaptive resources 115 may, based on commands received from the computing resources 112, generate emergency vehicle warnings, slow vehicle warnings, wrong-way driving warning, and/or lane change warnings. Other examples of warnings or alerts are found in ETSI TR 102 638. The display and adaptive resources 115 may, based on commands received from the computing resources 112, cause self-driving functions or an advanced driver-assistance system (ADAS) to activate and control a vehicle (e.g., 110a-110c) in a particular way (e.g., steer the vehicle back into lane, apply the brakes, or the like).

As briefly mentioned above, the server 140 may be configured to receive, process, and/or forward or otherwise send V2X messages. The server 140 may also be configured to perform one or more processes that enable determining of the quality of V2X communications. These functions of the server 140 may be based on information stored in database 150. As depicted in Fig. 1, database 150 may include communication station state information, V2N message forwarding information, and V2X QoS information.

The communication station state information may include records that associate communication station identifiers with status information of the communication stations. In this way, the server 140 may be able to determine the status information for a communication station based on a communication station identifier. The communication station identifiers and the status information may be extracted from V2X messages received by the server 140.

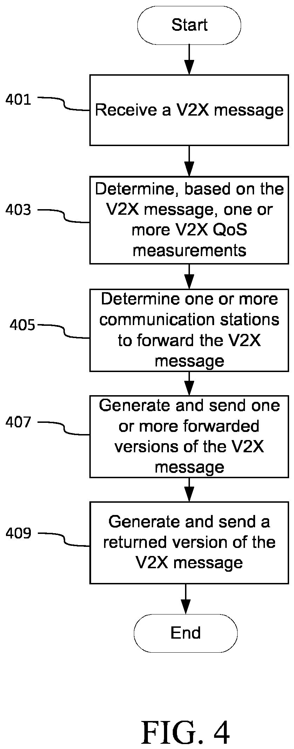

The V2X QoS information may include records that associate communication station identifiers with V2X QoS measurements for one or more V2X links associated with the communication station identifiers. For example, for vehicle 110a, the V2X QoS information may include a record that associates the communication station identifier of the vehicle 110a with V2X links 120a, 125a, and 125b. The record may indicate the V2X links based on identifiers of the destination (e.g., the record, for vehicle 110a, may indicate the V2X link 125a by the communication station identifier of vehicle 110c). The record may, for the vehicle 110a, further associate each V2X link 120a, 125a and 125b with V2X QoS measurements for the V2X link. In this way, the server 140 may, based on a communication station identifier, be able to determine which links are associated with a communication station and the V2X QoS measurements for the associated V2X links. The V2X QoS measurements may have been included in a V2X messages received by the server 140 (e.g., a V2X message may include V2X QoS measurements determined at a communication station), or may have been determined by the server 140 based on a received V2X message. Examples of V2X QoS information that may be determined by the server 140 will be discussed in connection with Figs. 3A-3C and 4. Again, V2X QoS information may include measurements including latency, packet loss, one-way delay, RTT, or other indication of link quality to a communication station.

The V2N message forwarding information may include records that associate communication station identifiers with indications as to whether V2X messages are to be forwarded to other communication stations via V2N communications. For example, for vehicle 110a, the V2N message forwarding information may include a record that associates the communication station identifier of the vehicle 110a with V2X links 120a, 125a, and 125b. The record may indicate the V2X links based on identifiers of the link destination (e.g., the record, for vehicle 110a, may indicate the V2X link 125a by the communication station identifier of vehicle 110c). The record may, for the vehicle 110, further associate each V2X link 120a, 125a, and 125b with indications as to whether V2X messages are to be forwarded to the V2X link's destination via V2N communications. The indications as to whether V2X messages are to be forwarded may be determined based on the V2X QoS information. As one example for V2X link 125a, if the V2X QoS measurements for V2X link 125a are below thresholds or acceptable levels, V2X messages may be forwarded via V2N communications; alternatively, if the V2X QoS measurements are above thresholds or acceptable levels, the V2X messages may not be forwarded via V2N communications.

One reason to determine the V2X QoS information and the messaging forwarding information is to allow for V2N communication when V2V communication is deemed unreliable or slow. V2V communication can be unreliable or slow based on factors related to the propagation characteristics of the V2V communication link. For example, the propagation characteristics of V2X messages sent via the V2V communication link (e.g., V2X link 125a) depend on the distance between the communication stations (e.g., the distance between vehicle 110a and vehicle 110c), line-of-sight obstacles, V2V communication load (determined by the communication station density) and any radio interference.

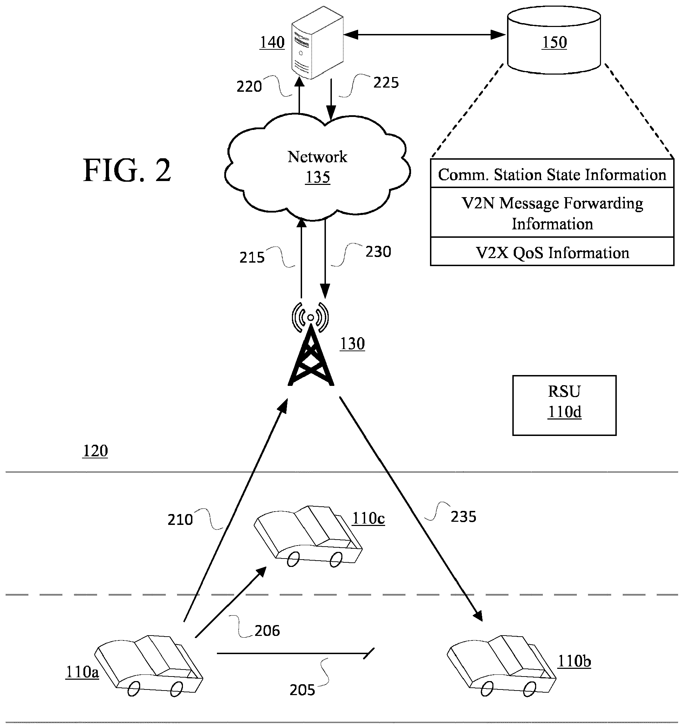

Fig. 2 shows an example block diagram that includes an example of an unreliable or slow V2V communication link and an example of V2X message forwarding using V2N communications. Figure 2 depicts a similar example as Fig. 1, and includes communication stations 110a-110d, RAN equipment 130, network 135, server 140, and database 150. Instead of showing V2X links 120a-120d and 125a-125d, the example of FIG. 2 depicts vehicle 110a attempting to send a V2X message via V2V communications 205 and 206. The V2V communication 206 is successfully received by vehicle 110c. However, due to an unreliable and/or slow V2X link (e.g., V2X link 125 of Fig. 1), the V2V communication 205 is not received by vehicle 11 0b. The example of Fig. 2 also depicts vehicle 110a transmitting the V2X message via a multi-hop V2N communication, which begins at communication 210 between the vehicle 110b and the RAN equipment 130. For the multi-hop V2N communication, the V2X message travels to the server 140, via the network 135, based on communications 215 and 220. The server 140 may determine to forward the V2X message to the vehicle 110b. This determination may be performed based on information stored in the database 150 (e.g., the V2N message forwarding information and/or the V2X QoS information). The V2X message may be forwarded, from the server 140 and via the network 135, to the RAN equipment 130 based on communications 225 and 230. The RAN equipment 130 may second the V2X message to the vehicle 110b based on communication 235. In this way, vehicle 110b may receive the V2X message even when an unreliable or slow link exists between vehicles 110a and 110b. One way to achieve this is to always send V2X messages using V2V communications and V2N communications. Alternatively, V2N message forwarding may be used based on selective modes. Additionally, the communication stations 110a-110d and the server 140 may, based on the various V2V and V2N communications depicted in Fig. 2, determine and disseminate V2X QoS measurements amongst themselves. Further details on the ways in which V2N message forwarding may be performed and the ways in which the V2X QoS measurements may be determined and disseminated are provided in the below examples.

Some of the challenges involved in providing reliable V2X communication include how to determine the V2X QoS measurements and how to disseminate the V2X QoS measurements to each communication station 110a-110d and the server 140. Examples of how to determine V2X QoS measurements and disseminate the V2X QoS measurements are provided in Figs. 3A-3C, 4, 5A-5B, and 6. Figs. 3A-3C and 4 primarily relate to determination and dissemination techniques based on V2N communications. Figs. 5A-5B and 6 primarily relate to determination and dissemination techniques based on V2V communications between the communication stations

Figs. 3A-3C shows an example flow for determining and disseminating V2X QoS information based on V2N communications. In particular, Figs. 3A-3C show an example flow where V2X messages are sent from a vehicle V1 and, based on V2N communication, are disseminated to one or more other vehicles (e.g., V2). Vehicle V1, for example, may be vehicle 110a of Figs. 1 and 2. Vehicle V2, for example, may be vehicle 110b of Figs. 1 and 2. The dissemination of the V2X messages may also allow for the determination and dissemination of V2X QoS information by the various communication stations and the server S1. The server S1 may be the server 140 of Figs. 1 and 2. A similar flow would be performed if a different vehicle or communication station (e.g., vehicle 110c) sends V2X messages based on its own V2N communication.

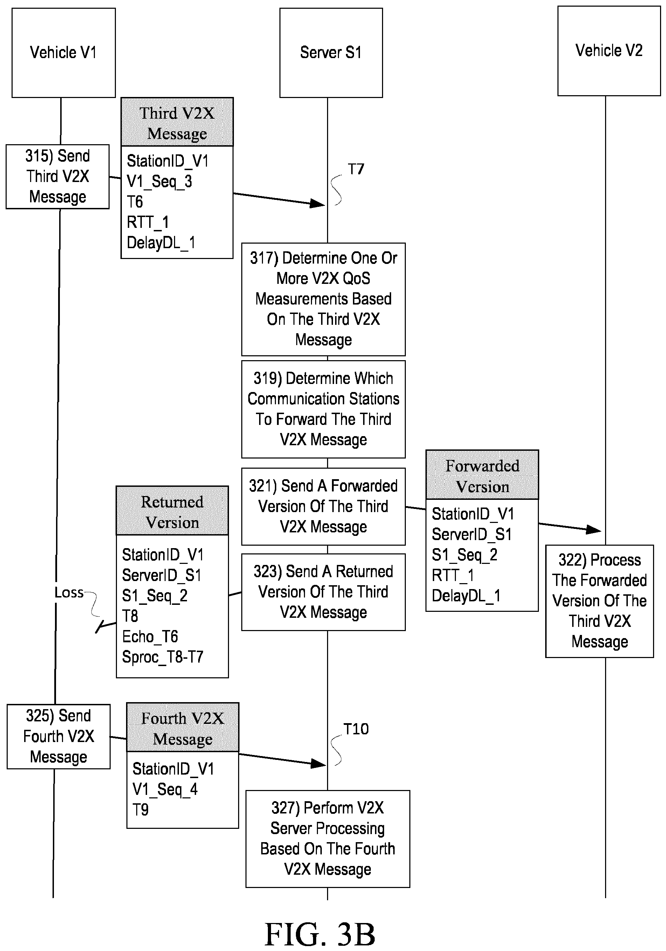

The examples discussed in the example flow of Figs 3A and 3B include the determination of various V2X QoS measurements including, for example, delay, round-trip time and loss. Which specific types of V2X QoS measurements can be determined may depend on implementation details of the ITS. For example, determination of the delay between the vehicle V1 and the server S1 may require that the server S1 and the vehicle V1 are time synchronized. If they are not time synchronized, the delay between the vehicle V1 and the server S1 may not be determined. Other measurements, such as the round-trip time and the loss may not be conditioned upon the vehicle V1 and the server S1 being time synchronized. Therefore, measurements such as the round-trip time and the loss may be determined whether or not the vehicle V1 and the server S1 are time synchronized.

The V2X messages generated and sent throughout the example flow of Figs. 3A-3C may include various information including, among other things, status information of a communication station, communication station identifiers, timestamp values, sequence numbers, V2X QoS measurements. Figure 3A depicts the V2X messages in a simplified form and uses various abbreviations for the various types of information that may be included. A V2X message may include some or all of the information in the following table.

**TABLE I: Examples of Information Included In A V2X Message**

| **Information Type** | **Associated With V2X QoS Information?** | **Abbreviated in Example Flow of** **Figs. 3A-3C****?** |
|---|---|---|
| Sequence number for a V2X message | Yes, it may be used to determine one or more V2X QoS measurements (e.g., loss). | X_Seq_Y where X indicates the source of the sequence number and Y indicates the value of the sequence number (e.g., V1_Seq_1 indicates a sequence number determined by the vehicle V1 and is the first in the sequence). Each link between a server and a communication station may have its own sequence number. |
| Timestamp | Yes, it may be used to determine one or more V2X QoS measurements (e.g., delay and round-trip time). | TX where X indicates the value of the timestamp with higher values of X being later in time (e.g., T2 is later in time than T1). |
| Timestamp echo | Yes, it may be used to determine one or more V2X QoS measurements (e.g., round-trip time). | Echo_TX where X indicates the value of the echoed timestamp (e.g., if timestamp T1 is echoed in a V2X message, it is abbreviated as ECHO _ T1). |
| Server processing time | Yes, it may be used to determine one or more V2X QoS measurements (e.g., round-trip time). | SProc_TX-TY where TX and TY indicate the times that form the basis for determining the time spent by the server in processing a V2X message (e.g., Sproc_T4-T3 would indicate that the server's processing time was determined based on subtracting T3 from T4). |
| Uplink delay from a communication station to a server | Yes, this indicates a V2X QoS measurement (e.g., delay). | DelayUL_X where X indicates the value of the uplink delay between a server and a communication station. |
| Downlink delay from a server to a communication station | Yes, this indicates a V2X QoS measurement (e.g., delay). | DelayDL_X where X indicates the value of the downlink delay between a server and a communication station. |
| Round-trip time | Yes, this indicates a V2X QoS measurement (e.g., round-trip time). | RTT_X where X indicates the value of the round-trip time. |
| Downlink loss from a server to | Yes, this indicates a V2X QoS measurement (e.g., loss) | LossDL_X_Y where X indicates a communication station associated with the downlink loss and Y indicates a number of instances for V2X message |
| a communication station | | loss for the downlink to the communication station (e.g., LossDL_V1_1 indicates that this is the first instance of downlink loss from the server S1 to the vehicle V1). |
| Uplink loss from a communication station to a server | Yes, this indicates a V2X QoS measurement (e.g., loss) | LossUL_X_Y where X indicates a communication station associated with the uplink loss and Y indicates a number of instances for V2X message loss for the uplink to the communication station (e.g., LossUL_V1_2 indicates that this is the second instance of uplink loss from the vehicle V1 to the server S1. |
| Communication station identifier | No | StationlD _VX where X indicates the source station for the identifier (e.g., StationID_V1 is a communication station identifier for vehicle V1). |
| Server identifier | No | ServerID_SX where X indicates the source server for the identifier (e.g., ServerID_S1 is an identifier for server S1). |
| Status information of a communication station | No | Not depicted in the example flow. |

At 301, the vehicle V1 may attempt to send a first V2X message to the server S1 (e.g., based on a V2N communication). The first V2X message may include a communication station identifier for the vehicle V1 (e.g., StationlD_V1); a timestamp value that indicates a time, based on the vehicle V1's clock, at which the first V2X message was generated (T1); and a sequence number for the first V2X message (e.g., V1_Seq_1). However, the first V2X message may, due to an unreliable or slow link or communication hop between the vehicle V1 and the server S1, be lost.

At 303, the vehicle V1 may send a second V2X message to the server S1. The second V2X message may include a communication station identifier for the vehicle V1 (e.g., StationlD_V1); a timestamp value that indicates a time, based on the vehicle V1's clock, at which the second V2X message was generated (T2); and a sequence number for the second V2X message (e.g., V1_Seq_2). The second V2X message may travel along a path similar to what is depicted in Fig. 2 between vehicle 110a and server 140 (e.g., communications 210, 215 and 220).

At 305, the server S1 may, based on the second V2X message, determine one or more V2X QoS measurements. For example, the server S1 may, based on the sequence number of the second V2X message determine that a loss occurred on the uplink from the vehicle V1 to the server S1. The loss may be determined because the second V2X message was not of the expected sequence number (e.g., V1_Seq_1 was expected, but V1_Seq_2 was received). An indication of the uplink loss between the vehicle V1 and the server S1 may be stored within a database as part of the V2X QoS information (e.g., stored in database 150).

Additionally, the server S1 may determine a time at which the second V2X message was received (e.g., T3). This time may be used to determine a server processing time for the second V2X message and a delay (e.g., an uplink delay between the vehicle V1 and the server S1). The uplink delay between the vehicle V1 and the server S1 may be determined based on subtracting T3 (as determined by the server S1) and T2 (as found within the second V2X message). An indication of the uplink delay between the vehicle V1 and the server S1 may be stored in the database as part of the V2X QoS information. The server processing time will be discussed below in connection with 311.

At 307, the server S1 may determine which communication stations to forward the second V2X message. This determination may be based on V2N message forwarding information stored within a database (e.g., database 150). In the example flow of Fig. 3A, the server S1 may determine to forward the second V2X message to the vehicle V2.

At 309, the server S1 may, based on the determination of which communication stations to forward, send a forwarded version of the second V2X message to the vehicle V2. The forwarded version of the second V2X message may include some or all the information of the second V2X message and additional information added by the server S1. For example, the server S1 may generate the forwarded version of the second V2X message to include the communication station identifier of the vehicle V1 (e.g., StationID_V1); the server identifier (e.g., ServerID_S1); and a sequence number for V2X messages sent from the server S1 to the vehicle V2 (e.g., S1_Seq_1). The server S1 may also generate the forwarded version to include one or more V2X QoS measurements, such as the indication of the uplink loss between the vehicle V1 and the server S1 (e.g., LossUL_V1_1), and the indication of the uplink delay between the vehicle V1 and the server S1 (e.g., DelayUL_1). The forwarded version of the second V2X message may travel along a path similar to what is depicted in Fig. 2 between the server 140 and the vehicle 110b (e.g., communications 225, 230 and 235). While not shown in Fig. 3A, if the server S1 determined to forward the second V2X message to other communication stations, the server S1 would also forward the second V2X message to those stations before proceeding to 311.

At 310, the vehicle V2 may process the forwarded version of the second V2X message. Processing the forwarded version of the second V2X message may include storing one or more V2X QoS measurements in a database local to the vehicle V2 (e.g., the database 114 of the vehicle V2). In this way, the vehicle V2 may be informed of the uplink loss between the vehicle V1 and the server S1 (e.g., LossUL_V1_1) and the uplink delay between the vehicle V1 and the server S1 (DelayUL_1). Processing the forwarded version may also include determining one or more V2X QoS measurements based on the forwarded version. The types of V2X QoS measurements that may be determined by vehicle V2 are similar to those discussed below in connection with vehicle V1.

At 311, the server S1 may send a returned version of the second V2X message to the vehicle V1. The returned version of the second V2X message may include some or all the information of the second V2X message and additional information added by the server S1. For example, the server S1 may generate the returned version of the second V2X message to include the communication station identifier of the vehicle V1 (e.g., StationID_V1); the server identifier (e.g., ServerID_S1); a sequence number for V2X messages sent from the server S1 to the vehicle V1 (e.g., S1_Seq_1); an echo of the timestamp from the second V2X message (e.g., Echo_T1); and a timestamp that indicates a time at which the returned version was generated by the server S1 (e.g., T4). The server S1 may also generate the returned version to include one or more V2X QoS measurements, such as the indication of the uplink loss between the vehicle V1 and the server S1 (e.g., LossUL_V1_1); the indication of the uplink delay between the vehicle V1 and the server S1 (e.g., DelayUL_1); and an indication of the server S1's processing time for the second V2X message (e.g., Sproc_T4-T3). The server S1's processing time may be determined based on subtracting the time at which the returned version was generated (e.g., T4) and the time at which the second V2X message was received by the server S1 (e.g., T3).

At 313, the vehicle V1 may process the returned version of the second V2X message. Processing the returned version of the second V2X message may include storing one or more V2X QoS measurements in a database local to the vehicle V1 (e.g., the database 114 of the vehicle V1). In this way, the vehicle V1 may be informed of the uplink loss between the vehicle V1 and the server S1 (e.g., LossUL_V1_1) and the uplink delay between the vehicle V1 and the server S1 (DelayUL_1).

Processing the returned version may also include determining one or more V2X QoS measurements based on the returned version. For example, the vehicle V1 may determine a time at which the returned version of the second V2X message was received (e.g., T5). This time may be used to determine a delay (e.g., a downlink delay between the vehicle V1 and the server S1) and a round-trip time. The downlink delay between the vehicle V1 and the server S1 may be determined based on subtracting T5 (as determined by the vehicle V1) and T4 (as found within the returned version of the second V2X message). An indication of the downlink delay between the vehicle V1 and the server S1 may be stored in the local database of the vehicle V1. The round-trip time may be determined based on the timestamp echo of the returned version (e.g., Echo_T2), the time at which the returned version was received by the vehicle V1 (e.t., T5), and the server S1's processing time of the second V2X message (e.g., Sproc_T4-T3). For example, the round-trip time may be determined based on first subtracting T5 from Echo_T2 and then also subtracting Sproc_T4-T3 from the result of T5-based subtraction (e.g., the result of T5 - Echo_T2). In other words, the round-trip time may be determined based on (T5 - Echo_T2) - Sproc_T4-T3. The round-trip time may be stored in the local database of the vehicle V1.

Continuing at Fig. 3B, at 315, the vehicle V1 may send a third V2X message to the server S1. The third V2X message may include a communication station identifier for the vehicle V1 (e.g., StationlD_V1); a timestamp value that indicates a time, based on the vehicle V1's clock, at which the third V2X message was generated (T6); and a sequence number for the second V2X message (e.g., V1_Seq_3). The vehicle V1 may also generate the third V2X message to include one or more V2X QoS measurements including, for example, the round-trip time between the vehicle V1 and the server S1 (RTT_1) and the indication of the downlink delay between the vehicle V1 and the server S1 (e.g., DelayDL_1).

At 317, the server S1 may determine, based on the third V2X message, one or more V2X QoS measurements. This may be performed similar to step 305 of Fig. 3A. For example, the server S1 may determine a time at which the third V2X message was received (e.g., T7). This time may be used to determine a server processing time for the third V2X message and a delay (e.g., an uplink delay between the vehicle V1 and the server S1). The uplink delay between the vehicle V1 and the server S1 may be determined based on subtracting T7 (as determined by the server S1) and T6 (as found within the third V2X message). An indication of the uplink delay between the vehicle V1 and the server S1 may be stored in the database as part of the V2X QoS information. The server processing time will be discussed below in connection with 323.

Determining one or more V2X QoS measurements may include retrieving one or more V2X QoS measurements from the third V2X message and storing any retrieved V2X QoS measurement. For example, the server S1 may retrieve the round-trip time and the downlink delay from the third V2X message and store those V2X QoS measurements in a database as part of the V2X QoS information. In this way, the server S1 may be informed of the round-trip time between the vehicle V1 and the server S1 (RTT_1) and the indication of the downlink delay between the vehicle V1 and the server S1 (e.g., DelayDL_1).

At 319, the server S1 may determine which communication stations to forward the third V2X message. This determination may be based on V2N message forwarding information stored within a database (e.g., database 150). In the example flow of Fig. 3B, the server S1 may determine to forward the third V2X message to the vehicle V2.

At 321, the server S1 may, based on the determination of which communication stations to forward, send a forwarded version of the third V2X message to the vehicle V2. The forwarded version of the third V2X message may include some or all the information of the third V2X message and additional information added by the server S1. For example, the server S1 may generate the forwarded version of the third V2X message to include the communication station identifier of the vehicle V1 (e.g., StationID_V1); the server identifier (e.g., ServerID_S1); and a sequence number for V2X messages sent from the server S1 to the vehicle V2 (e.g., S1_Seq_2). The server S1 may also generate the forwarded version to include one or more V2X QoS measurements, such as the indication of the round-trip time between the vehicle V1 and the server S1 (e.g., RTT_1), and the indication of the downlink delay between the vehicle V1 and the server S1 (e.g., DelayDL_1).

At 322, the vehicle V2 may process the forwarded version of the third V2X message. Processing the forwarded version of the third V2X message may include storing one or more V2X QoS measurements in a database local to the vehicle V2 (e.g., the database 114 of the vehicle V2). In this way, the vehicle V2 may be informed of the round-trip time between the vehicle V1 and the server S1 (e.g., RTT_1) and the downlink delay between the vehicle V1 and the server S1 (e.g., DelayDL_1). Processing the forwarded version may also include determining one or more V2X QoS measurements based on the forwarded version. The types of V2X QoS measurements that may be determined by vehicle V2 are similar to those discussed below in connection with vehicle V1.

At 323, the server S1 may attempt to send a returned version of the thirdV2X message to the vehicle V1. The returned version of the second V2X message may include some or all the information of the third V2X message and additional information added by the server S1. For example, the server S1 may generate the returned version of the third V2X message to include the communication station identifier of the vehicle V1 (e.g., StationID_V1); the server identifier (e.g., ServerID_S1); a sequence number for V2X messages sent from the server S1 to the vehicle V1 (e.g., S1_Seq_2); an echo of the timestamp from the third V2X message (e.g., Echo_T6); and a timestamp that indicates a time at which the returned version was generated by the server S1 (e.g., T8). The server S1 may also generate the returned version to include one or more V2X QoS measurements, such as the indication of the server S1's processing time for the third V2X message (e.g., Sproc_T8-T7). The server S1's processing time may be determined based on subtracting the time at which the returned version was generated (e.g., T8) and the time at which the third V2X message was received by the server S1 (e.g., T7). However, the returned version of the third V2X message may, due to an unreliable or slow link or communication hop between the vehicle V1 and the server S1, be lost.

At 325, the vehicle V1 may send a fourth V2X message to the server S1. The fourth V2X message may include a communication station identifier for the vehicle V1 (e.g., StationlD_V1); a timestamp value that indicates a time, based on the vehicle V1's clock, at which the third V2X message was generated (T9); and a sequence number for the second V2X message (e.g., V1_Seq_4).

At 327, the server S1 may perform, based on the fourth V2X message, V2X server processing. V2X server processing may include steps similar to those discussed at 305, 307, 309, 317 and 319 of Figs. 3A and 3B. In other words, based on the fourth V2X message, the server S1 may determine one or more V2X QoS measurements (e.g., Sproc_T11-T10), determine which communication stations to forward the fourth V2X message, and send a forwarded version of the fourth V2X message to one or more communication stations (e.g., vehicle V2).

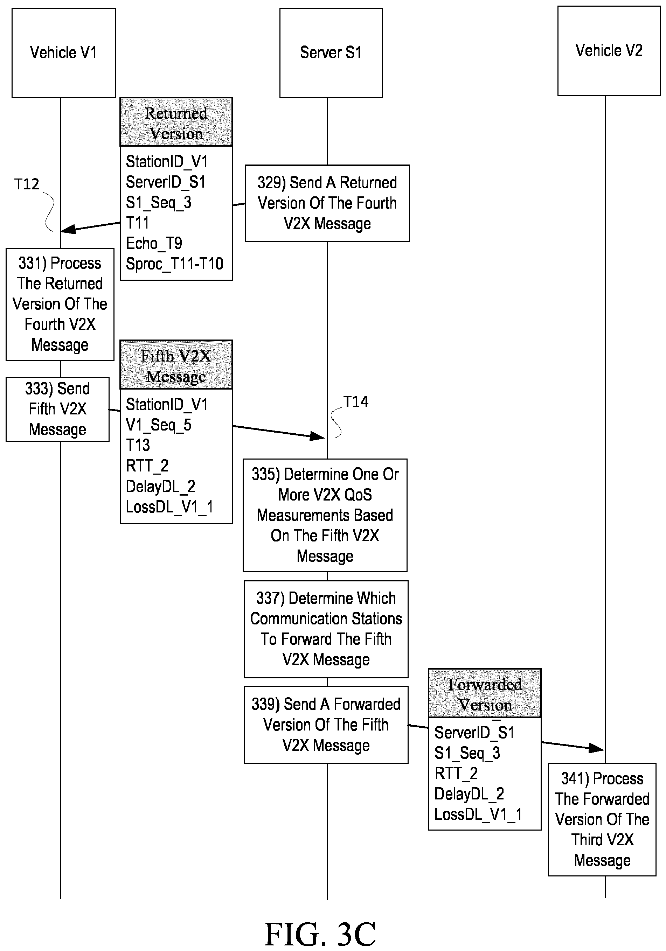

Continuing at Fig. 3C, at 329, the server S1 may send a returned version of the fourth V2X message. The returned version of the fourth V2X message may include some or all the information of the fourth V2X message and additional information added by the server S1. For example, the server S1 may generate the returned version of the fourth V2X message to include the communication station identifier of the vehicle V1 (e.g., StationID_V1); the server identifier (e.g., ServerID_S1); a sequence number for V2X messages sent from the server S1 to the vehicle V1 (e.g., S1_Seq_3); an echo of the timestamp from the fourth V2X message (e.g., Echo_T9); and a timestamp that indicates a time at which the returned version was generated by the server S1 (e.g., T11). The server S1 may also generate the returned version to include one or more V2X QoS measurements, such as the indication of the server S1's processing time for the third V2X message (e.g., Sproc_T11-T10). The server S1's processing time may be determined based on subtracting the time at which the returned version was generated (e.g., T11) and the time at which the third V2X message was received by the server S1 (e.g., T10).

At 331, the vehicle V1 may process the returned version of the fourth V2X message. Processing the returned version of the fourth V2X message may include storing one or more V2X QoS measurements in a database local to the vehicle V1 (e.g., the database 114 of the vehicle V1). In this way, the vehicle V1 may be informed of the uplink loss between the vehicle V1 and the server S1 (e.g., LossUL_V1_1) and the uplink delay between the vehicle V1 and the server S1 (DelayUL_1).

Processing the returned version may also include determining one or more V2X QoS measurements based on the returned version. For example, the vehicle V1 may, based on the sequence number of the returned version, determine that a loss occurred on the downlink from the vehicle V1 to the server S1. The loss may be determined because the returned version was not of the expected sequence number (e.g., S1_Seq_2 was expected, but S1_Seq_3 was received). An indication of the downlink loss between the vehicle V1 and the server S1 may be stored within a local database of the vehicle V1.

Additionally, the vehicle V1 may determine a time at which the returned version of the fourth V2X message was received (e.g., T12). This time may be used to determine a delay (e.g., a downlink delay between the vehicle V1 and the server S1) and a round-trip time. The downlink delay between the vehicle V1 and the server S1 may be determined based on subtracting T12 (as determined by the vehicle V1) and T11 (as found within the returned version of the fourth V2X message). An indication of the downlink delay between the vehicle V1 and the server S1 may be stored in the local database of the vehicle V1. The round-trip time may be determined based on the timestamp echo of the returned version (e.g., Echo_T9), the time at which the returned version was received by the vehicle V1 (e.t., T12), and the server S1's processing time of the second V2X message (e.g., Sproc_T11-T10 For example, the round-trip time may be determined based on (T12 - Echo_T9) - Sproc_T11-T10. The round-trip time may be stored in the local database of the vehicle V1.

At 333, the vehicle V1 may send a fifth V2X message to the server S1. The fifth V2X message may include a communication station identifier for the vehicle V1 (e.g., StationlD_V1); a timestamp value that indicates a time, based on the vehicle V1's clock, at which the fifth V2X message was generated (T13); a sequence number for the second V2X message (e.g., V1_Seq_5). The vehicle V1 may also generate the fifth V2X message to include one or more V2X QoS measurements including, for example, the round-trip time between the vehicle V1 and the server S1 (e.g., RTT_2) and the indication of the downlink delay between the vehicle V1 and the server S1 (e.g., DelayDL_2); and the indication of the downlink loss between the vehicle V1 and the server S1 (e.g., LossDL_V1_1).

At 335, the server S1 may determine, based on the fifth V2X message, one or more V2X QoS measurements. This may be performed similar to step 305 of Fig. 3A. For example, the server S1 may determine a time at which the fifth V2X message was received (e.g., T14). This time may be used to determine a server processing time for the fifth V2X message and a delay (e.g., an uplink delay between the vehicle V1 and the server S1). The uplink delay between the vehicle V1 and the server S1 may be determined based on subtracting T14 (as determined by the server S1) and T13 (as found within the fifth V2X message). An indication of the uplink delay between the vehicle V1 and the server S1 may be stored in the database as part of the V2X QoS information.

Determining one or more V2X QoS measurements may include retrieving one or more V2X QoS measurements from the third V2X message and storing any retrieved V2X QoS measurement. For example, the server S1 may retrieve the round-trip time, the indication of the downlink delay, and the indication of the downlink loss from the fifth V2X message and store those V2X QoS measurements in the database as part of the V2X QoS information. In this way, the server S1 may be informed of the round-trip time between the vehicle V1 and the server S1 (e.g., RTT_2) and the indication of the downlink delay between the vehicle V1 and the server S1 (e.g., DelayDL_2); and the indication of the downlink loss between the vehicle V1 and the server S1 (e.g., LossDL_V1_1)

At 337, the server S1 may determine which communication stations to forward the fifth V2X message. This determination may be based on V2N message forwarding information stored within a database (e.g., database 150). In the example flow of Fig. 3C, the server S1 may determine to forward the fifth V2X message to the vehicle V2.

At 339, the server S1 may, based on the determination of which communication stations to forward, send a forwarded version of the fifth V2X message to the vehicle V2. The forwarded version of the fifth V2X message may include some or all the information of the fifth V2X message and additional information added by the server S1. For example, the server S1 may generate the forwarded version of the fifth V2X message to include the communication station identifier of the vehicle V1 (e.g., StationID_V1); the server identifier (e.g., ServerID_S1); and a sequence number for V2X messages sent from the server S1 to the vehicle V2 (e.g., S1_Seq_3). The server S1 may also generate the forwarded version to include one or more V2X QoS measurements, such as the round-trip time between the vehicle V1 and the server S1 (e.g., RTT_2) and the indication of the downlink delay between the vehicle V1 and the server S1 (e.g., DelayDL_2); and the indication of the downlink loss between the vehicle V1 and the server S1 (e.g., LossDL_V1_1).

At 341, the vehicle V2 may process the forwarded version of the fifth V2X message. Processing the forwarded version of the fifth V2X message may include storing one or more V2X QoS measurements in a database local to the vehicle V2 (e.g., the database 114 of the vehicle V2). In this way, the vehicle V2 may be informed of the round-trip time between the vehicle V1 and the server S1 (e.g., RTT_2) and the indication of the downlink delay between the vehicle V1 and the server S1 (e.g., DelayDL_2); and the indication of the downlink loss between the vehicle V1 and the server S1 (e.g., LossDL_V1_1). Processing the forwarded version may also include determining one or more V2X QoS measurements based on the forwarded version.

Additionally, the vehicles and other communication stations may be able to take action based on V2X QoS measurements. These actions may be performed as part of, or based on, the vehicle's processing of received V2X messages (e.g., steps 310, 313, 332, 331, 341 of Figs. 3A-3C). For example, vehicle V2 may, based on the V2X QoS measurements, display a warning or send a command to an adaptive resource of the vehicle (e.g., similar to the discussion of the display and adaptive resources 115 of Fig. 1). As some particular examples, based on the indication of the downlink loss between the vehicle V1 and the server S1, the vehicleV2 may cause display of a safe distance warning that indicates vehicle V1 is at an unsafe distance from the vehicle V2. In this way, the driver may apply the brakes to provide additional distance between itself and vehicle V1. Based on the indication of uplink loss between the vehicle V1 and the server S1, the vehicle V2 may send a command to an ADAS of the vehicle V2. The command may cause application of the vehicle V2's brakes to increase the distance between vehicle V1 and the vehicle V2. These examples illustrate ways to improve safety between vehicles V1 and V2 by taking action based on the potentially unreliable communication with vehicle V1.

The above example flow of Figs. 3A-3C provides a number of examples of the types of V2X QoS measurements that may be determined (e.g., loss, delay, round-trip time, server processing time). The above example flow of Figs. 3A-3C also provides a number of examples of the ways in which the V2X QoS measurements are disseminated to the communication stations (e.g., vehicles V1 and V2) and the server (e.g., server S1). Based on the example flow, the server may be performing similar steps upon receiving each V2X message. For example, the server may, for each V2X message, determine one or more V2X QoS measurements, determine which communication stations to forward the V2X message; send one or more forwarded versions of the V2X message to one or more communication stations; and send a returned version of the V2X message to the source of the V2X message. Fig. 4 shows an example method of V2X message processing that may be performed by a server. The example method may, for example, be performed each time a V2X message is received by the server based on V2N communication. In relation to the example flow of Figs. 3A-3C, the example method of Fig. 4 may be performed by the server S1 for each of the first to fifth V2X messages described in connection with the example flow of Figs. 3A-3C. For purposes of the example method of Fig. 4, the server will be referred to as a computing device.

At 401, a computing device (e.g., server S1 of Figs. 3A-3C; server 140 of Figs. 1 or 2) may receive a V2X message. The V2X message may have been received from a communication station (e.g., vehicle V1 of Figs. 3A-3C; or stations 110a-110d of Figs. 1 and 2). The V2X message may have routed to the computing device based on a multi-hop V2N communication path (e.g., a communication path represented by communications 210, 215 and 220 of Fig. 2). The V2X message may include some or all of the information included in Table I. For example, the V2X message may be any of the V2X messages described in the example flow of Figs. 3A-3C (e.g., the first to fifth V2X messages).

At 403, the computing device may determine, based on the V2X message, one or more V2X QoS measurements. This determination may be performed similar to steps 305, 317, and 335 of Figs. 3A-3C For example, the computing device may determine V2X QoS measurements such as round-trip time, a server processing time for the V2X message, an uplink delay, a downlink delay, an uplink loss, and a downlink loss. Indeed, the computing device may determine any of the V2X QoS measurements discussed throughout the example flow of Figs. 3A-3C (e.g., LossUL_V1_1; LossDL_V1_1; DelayUL_1; DelayUL_2; DelayDL_1; RTT_1; RTT_2; Sproc_T4-T3; SprocT8-T7; Sproc_T11-T10). Some V2X QoS measurements may be determined based on a generation of a returned version of the V2X message (e.g., the server processing time for the V2X message). Some of the V2X QoS measurements may be retrieved from the V2X message (e.g., downlink delay, round-trip time, and downlink loss) and other V2X QoS measurements may be determined by the computing device (e.g., server processing time, uplink delay, and uplink loss). Each of the one or more V2X QoS measurements may be stored in a database as part of V2X QoS information (e.g., database 150 of Figs. 1 and 2). Further, based on the V2X message and the one or more V2X QoS measurements, the server may update or generate the records discussed above in connection with database 150 (e.g., storing or updating one or more records of the communication station state information, V2N message forwarding information, or the V2X QoS information).

At 405, the computing device may determine one or more communication stations to forward the V2X message. This determination may be performed similar to steps 307, 319 and 337 of Figs. 3A-3C. For example, the computing device may determine, based on the V2N message forwarding information of the database (e.g., database 150), whether the V2X message is to be forwarded to any of the communications stations associated with the source of the V2X message. As an example with respect to Figs. 1 and 2, the V2X message may have been received from vehicle 110a and the computing device may determine to forward to one or more of the communication stations 110b-110d. Forwarding to communication stations 110b-110d may depend on whether the V2N message forwarding information indicates that forwarding is enabled for that communication station (e.g., the V2X message may be forwarded to the communication station 110b if the V2N message forwarding information indicates that message forwarding is enabled between stations 110a and 110b; the V2X message may not be forwarded to the communication station 110d if the V2N message forwarding information indicates that message forwarding is disabled between stations 110a and 110d).

At step 407, the computing device may generate and send one or more forwarded versions of the V2X message. This determination may be performed similar to steps 309, 321, and 339 of Figs. 3A-3C. For example, the one or more forwarded versions may be sent to each of the one or more communication stations determined at step 405. Each forwarded version of the V2X message may include some or all of the information included in Table I. Moreover, each forwarded version may include some or all of the information of the V2X message and additional information added by the computing device when generating the forwarded version. For example, a forwarded version of the V2X message may be any of the forwarded versions described in the example flow of Figs. 3A-3C (e.g., the forwarded versions sent at steps 309, 321, and 339 of Figs. 3A-3C).

At step 409, the computing device may generate and send a returned version of the V2X message. This determination may be performed similar to steps 311, 323, and 329 of Figs. 3A-3C. For example, the returned version may be sent to the source of the V2X message (e.g., if the V2X message was sent from vehicle 110a, the returned version may be sent from the computing device and to the vehicle 110a). The returned version of the V2X message may include some or all of the information included in Table I. Moreover, the returned version may include some or all of the information of the V2X message and additional information added by the computing device when generating the returned version. For example, a returned version of the V2X message may be any of the returned versions described in the example flow of Figs. 3A-3C (e.g., the returned versions sent at steps 311 323, and 329 of Figs. 3A-3C). After sending the returned version of the V2X message, the method may end and the computing device may wait to receive another V2X message, upon which the example method of Fig. 4 may be repeated.

The above examples of Figs. 3A-3C and Fig.4 primarily relate to determination and dissemination techniques based on V2N communications. There are additional ways to determine V2X QoS measurements and disseminate those V2X QoS measurements to communication stations. For example, V2X QoS measurements can be determined based on V2V communications between the communication stations. Figs. 5A-5B and 6 primarily relate to determination and dissemination techniques based on V2V communications.

Additional types of V2X QoS measurements may be determined based on V2V communications between the communication stations. Table II provides additional examples of V2X QoS measurements that may be determined based on V2V communications and that may be included in a V2X message.

**TABLE II: Additional Examples of Information included In A V2X Message**

| **Information Type** | **Associated With V2X QoS Information?** |
|---|---|
| Uplink delay from a first communication station to a second communication station | Yes, this indicates a V2X QoS measurement (e.g., one-way delay between communication stations). |
| Downlink delay from a first communication station to a second communication station | Yes, this indicates a V2X QoS measurement (e.g., one-way delay between communication stations). |
| Downlink loss from a first communication station to a second communication station | Yes, this indicates a V2X QoS measurement (e.g., directional loss between communication stations) |
| Uplink loss from a first communication station to a second communication station | Yes, this indicates a V2X QoS measurement (e.g., directional loss between communication stations) |

Further, which specific types of V2X QoS measurements can be determined may depend on implementation details of the ITS. For example, determination of the one-way delay between two communication stations may require that the two communications are time synchronized. If they are not time synchronized, the one-way delay between the two communication stations may not be determined. Other measurements, such as a round-trip time and the directional loss may not be conditioned upon the communication stations being time synchronized. Therefore, measurements such as the round-trip time and the directional loss may be determined whether or not the two communication stations are time synchronized.

Fig. 5A shows an example method for a communication station sending one or more V2X messages that include V2X QoS measurements determined based on V2V communication. The example method is described as being performed by a first communication station (e.g., any one of communication station 110a-110d of Figs. 1 and 2; vehicle V1 of Figs 3A-3C).

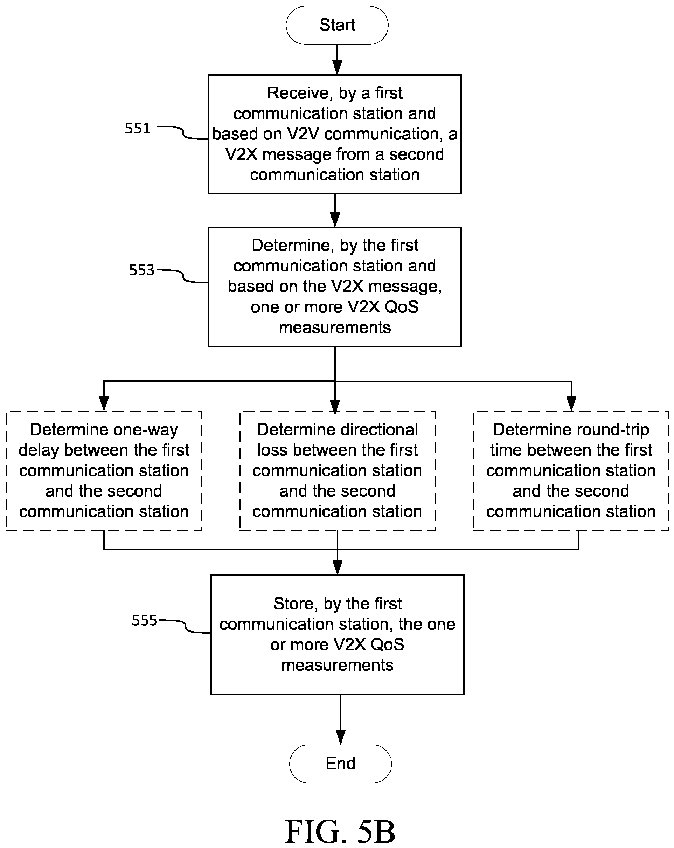

At step 501, a first communication station may generate a V2X message to include one or more V2X QoS measurements. The first communication station may determine which V2X QoS measurements to include within the V2X message based on a queueing mechanism or other indication that one or more V2X QoS measurements need to be sent by the first communication station. As described below in connection with step 555 of Fig. 5B, a V2X QoS measurement may be placed in a queue or otherwise indicated that it needs to be sent. The one or more V2X QoS measurements may have been determined based on previous V2X messages that were previously received or sent by the first communication station. Further, the previous V2X messages may have been received or sent based on V2V communication with one or more other communication stations. Details regarding how the one or more V2X QoS measurements are determined based on the previous V2X messages will be discussed below in connection with Fig. 5B.

At step 503, the first communication may send, based on V2V communication, the V2X message to one or more other communication stations. The V2X message may be sent via a V2V network interface and/or based on a short-range broadcast. In this way, other communication stations, based on receipt of the V2X message, may be informed of the one or more V2X QoS measurements. The V2X message sent based on V2V communication may include information similar to what is described in connection with Table I and Table II.

At step 505, the first communication station may determine whether the computing device is configured with a V2N network interface. If the computing device is configured with a V2N network interface, the method may proceed to step 507. Otherwise, the method may end.

At 507, the first communication station may send, based on V2N communication, the V2X message to a server. The V2X message may be sent via the V2N network interface and/or based on a wireless communication to RAN equipment. Eventually, the server may receive the V2X message and, based on receipt of the V2X message, may be informed of the one or more V2X QoS measurements. As described throughout the examples of this disclosure, the server may perform a number of processes based on receipt of the V2X message including, for example, by performing one or more of the example methods of Figs. 4 and 6, or a variation thereof. The V2X message sent based on V2N communication may include information similar to what is described in connection with Table I.

Fig. 5B shows an example method for a communication station receiving and processing a V2X message that includes V2X QoS measurements determined based on V2V communication. The example method is described as being performed by a first communication station (e.g., any one of communication station 110a-110d of Figs. 1 and 2; vehicle V1 of Figs 3A-3C).

At step 551, the first communication station may receive, based on V2V communication, a V2X message from a second communication station. The V2X message may be received by the first communication station via a V2V network interface or based on short-range broadcast performed by the second communication station. The V2X message may include information similar to what is described in connection with Table I and Table II.

At step 553, the first communication station may determine, based on the V2X message, one or more V2X QoS measurements. The first communication station may determine various types of V2X QoS measurements based on the V2X message. Figure 5B shows three examples. The first example includes the first communication station determining one-way delay between the first communication station and the second communication station. The second example includes the first communication station determining directional loss between the first communication station and the second communication station. The third example includes the first communication station determining round-trip time between the first communication station and the second communication station. Determining the one-way delay, directional loss and round-trip time between the communication stations may be performed similarly to the delay, loss and round-trip time described in connection with the example flow of Figs. 3A-3C and Table I. Additionally, examples of determining the one-way delay, directional loss and round-trip time between communication stations are provided below.

For example, determining a one-way delay between the first communication station and the second communication station may be performed based on a time difference between a time at which the V2X message was generated by the second communication station and a time at which the first communication station received the V2X message. A timestamp within the V2X message may indicate the time at which the V2X message was generated by the second communication station. This timestamp may be based on the second communication station's clock. The first communication station may determine the time at which the first communication station received the V2X message. The first communication station's determination of the time may be performed based on the first communication station's clock. The one-way delay may be based on a direction (e.g., a downlink delay may indicate the delay for messages sent by the first communication station; an uplink delay may indicate the delay for messages sent by the second communication station). The first communication station may be informed of downlink delay based on an indication of a downlink delay included in a V2X message sent from the second communication station.

Determining a directional loss between the first communication station and the second communication station may be performed based on sequence numbers included in the V2X message and a previous V2X message. The previous V2X message may have been previously received by the first communication station and sent by the second communication station. The first communication station may be expecting the sequence numbers to be in sequence and, if they are not, the first communication station may determine that an uplink loss occurred between the first communication station and the second communication station. The loss may be based on a direction (e.g., a downlink loss for the first communication station may indicate how many V2X messages sent by the first communication station were lost; a downlink loss for the first communication station may indicate how many V2X messages sent by the second communication station were lost). The first communication station may be informed of a downlink loss based on an indication of a downlink loss included in a V2X message sent from the second communication station.

Determining a round-trip time between the first communication station and the second communication station may be performed based on a time difference between a time at which the first communication station generated or sent a previous V2X message to the second communication station and a time at which the first communication station received the V2X message. For example, the first communication station may have sent a previous V2X message to the second communication station. The previous V2X message may have included a timestamp indicating a time at which the previous V2X message was generated (e.g., T21). The V2X message received at step 551 may include an echo of the timestamp (e.g. ECHO_T21). The first communication station may determine the round-trip time based on subtracting the echo of the timestamp from the time at which the V2X message was received by the first communication station (e.g., T22). In other words, the round-trip time may be determined based on the following: round-trip time = T22 - ECHO_T21.

At step 555, the first communication station may store the one or more V2X QoS measurements. For example, the one or more V2X QoS measurements may be stored in a local database of the communication station (e.g., database 114 of Fig. 1). Each V2X QoS measurement may be stored in a record that associates the V2X QoS measurement with an indication of a V2V link (e.g., 125a-125c of Fig. 1) or with a communication station that forms the V2V link (e.g., the second communication station for the example provided throughout Fig. 5B). Additionally, storing the one or more V2X QoS measurements may include queueing or otherwise indicating that the one or more V2X QoS measurements need to be sent by the first communication station. The queueing or indication may be used as a basis for including the one or more V2X QoS measurements within one or more V2X messages that are later sent based on V2N and/or V2V communication (as described in connection with Fig. 5A).

Additionally, the first communication station may be able to take action based on the one or more V2X QoS measurements. For example, the first communication station may, based on the one or more V2X QoS measurements, display a warning or send a command to an adaptive resource of the first communication station (e.g., similar to the discussion of the display and adaptive resources 115 of Fig. 1). As some particular examples, based on an indication of a directional delay between the first communication station and the second communication station, the first communication station may cause display of a safe distance warning that indicates the first communication station is at an unsafe distance from the second communication station. In this way and if the first communication station is a vehicle, the driver may apply the brakes to provide additional distance between the first communication station and the second communication station. Based on an indication of directional delay between the first communication station and the second communication station, the first communication station may send a command to an ADAS of the first communication station. The command may cause application of the brakes to increase the distance between the first communication station and the second communication station. These examples illustrate ways to improve safety between communication stations by taking action based on the potentially unreliable communication between the first communication station and the second communication station.

Fig. 6 shows an example method for a server receiving and processing a V2X message that includes V2X QoS measurements determined based on V2V communication. In particular, the example method includes steps that, based on the V2X QoS measurements, may enable or disable V2N network forwarding for communication stations. For example, based on one or more V2X QoS measurements determined by the first communication station (e.g., step 553 of Fig. 5B), the server (e.g., server 140 of Figs. 1 and 2; server S1 of Fig. 4) may enable or disable V2N message forwarding between the first communication station and the second communication station. By enabling V2N message forwarding, the server may forward V2X messages between the first communication station and the second communication station to compensate for a potentially unreliable or slow V2V link between the first communication station and the second communication station. By disabling V2N message forwarding, the server may reduce the number of V2X messages sent among the ITS.

At step 601, a server may receive, from a first communication station and based on V2N communication, a V2X message. The V2X message may be received by the server based on a V2N communication (e.g., step 507 of Fig. 5A). The V2X message may include information similar to what is described in connection with Table I and Table II.

At step 603, the server may extract, from the V2X message both status information of the first communication station and one or more V2X QoS measurements. The one or more V2X QoS measurements may include measurements that are based on V2V links between the first communication station and a second communication station (e.g., Table II and step 553 of Fig. 5B). The one or more V2X QoS measurements may include measurements based on V2N links between the first communication station and the server (e.g., Table I; Figs. 3A-3C; step 401 of Fig. 4) After extracting the status information and the one or more V2X QoX measurements from the V2X message, the server may store the status information and the one or more V2X QoS measurements. For example, the server may store the status information as part of the communication station state information of a database (e.g., database 150 of Figs. 1 and 2). Storing the state information may include generating or updating one or more records of the communication state information. The server may store the one or more V2X QoS measurements as part of the V2X QoS information of the database. Storing the one or more V2X QoS measurements may include generating or updating one or more records of the V2X QoS information.

At step 605, the server may determine whether one or more QoS targets are being satisfied. The one or more QoS targets may be for a V2V link . For example, a QoS target for a V2V link may be a threshold or other value that indicates the V2V link is unreliable or slow. As one particular example, a QoS target may be a threshold for a one-way delay (e.g., a threshold of 100 milliseconds). The threshold may be compared to a measurement of the one-way delay for the V2V link between the first communication station and the second communication station. The measurement may have been extracted from the V2X measurement or may be retrieved from the V2X QoS information. If the measurement exceeds the threshold for one-way delay, the server may determine that the QoS target is not satisfied. This process of comparing a measurements to a QoS target may be repeated for any remaining QoS target (e.g., a QoS target for round-trip time, a QoS target for directional loss). If at least one of the one or more QoS targets is not satisfied, the method may proceed to step 607. If each of the one or more the QoS targets are satisfied, the method may proceed to step 609.

At step 607, the server may store an indication that V2N message forwarding is enabled between the first communication station and the second communication station. The server may store the indication that V2N message forwarding is enabled between the first communication station and the second communication station as part of the V2N message forwarding information of the database. Storing the indication may include generating or updating one or more records of the V2N message forwarding information.

At step 609, the server may store an indication that V2N message forwarding is disabled between the first communication station and the second communication station. The server may store the indication that V2N message forwarding is disabled between the first communication station and the second communication station as part of the V2N message forwarding information of the database. Storing the indication may include generating or updating one or more records of the V2N message forwarding information.

At 611, the server may determine one or more communication stations to forward the V2X message. This determination may be performed similar to step 405 of Fig. 4. As a further example, this determination may be performed based on the status information of the first communication station (e.g., position, speed, and direction of the fist communication station). The server may have extracted the status information from the V2X message or retrieved the status information from the V2X QoS information. The status information for the first communication station may be compared to the status information of any other communication station. For example, the status information of the first communication station may be compared to the status information of each communication station stored in the communication station status information of the database. Based on the comparison, the server may determine a set of communication stations that are proximate to or near the first communication station. Being proximate to or near the first communication station may be based on the speeds, directions and positions of the communication stations. For example, if the first communication station is vehicle 110a of Fig. 1, vehicles 110b and 110c may be part of the set of communication stations, but RSU 110d may not be part of the set based on the distance between the RSU 110 and the vehicle 110a.

The set of communication stations may be compared to V2N message forwarding information to determine which have forwarding enabled. For example, the server may first retrieve, from the V2N message forwarding information, the record for the first communication station. The set of communication stations may be compared to this record to determine which communication stations of the set are, based on the record, associated with an indication that V2N message forwarding information is enabled. Based on this comparison, the server may determine one or more communication stations that have V2N message forwarding enabled. The server may determine to forward the V2X message to the one or more communication stations that have V2N message forwarding enabled.

At 613, the server may, for each of the one or more communication stations that have V2N message forwarding enabled, generate and send a forwarded version of the V2X message. The generation and sending of a forwarded version may, for example, proceed similar to step 407 of Fig. 4.

As seen from the above-described example method of Fig. 6, the server may be performed steps similar to those described in connection with Fig. 4. The example method of Fig. 6 may be extended if the server is configured to perform additional steps described in connection with Fig. 4. For example, the server may also be configured to generate and send a returned version of the V2X message received at step 601. Accordingly, the server may, following step 613, generate and send a returned version of the V2X message. The returned version of the V2X message may be sent to the first communication station. Additional extensions and variations to the example method of Fig. 6 may be implemented based on the configuration of the server or other components of the ITS.

Any of the method steps, operations, procedures or functions described herein may be implemented using one or more processors and/or one or more memory in combination with machine executable instructions that cause the processors and other components to perform various method steps, described features, or other aspect described herein. Examples of Fig. 7 shows an example apparatus, in particular a computing device 712, that may be used in the example environments of Figs. 1 and 2. The computing device 712 may be configured to perform some or all of the functions of any device, station, equipment, point, sensor, or the like, found in Figs. 1, 2, and 3A-3C. Further, the computing device 712 may be configured to perform some or all of the steps discussed in connection with Figs. 3A-3C, 4, 5A-5B and 6. The computing device 712 may be configured to perform any other process, feature or aspect discussed in connection with Figs. 1-6, or any variation thereof.

The computing device 712 shows just one example of the various types of hardware components that may be present in an apparatus that is configured to implement one or more aspects described in this disclosure. Computing device 712 may include a controller 725. The controller 725 may be connected to a user interface control 730, display 736 and/or other elements as illustrated. Controller 725 may include circuitry, such as for example one or more processors 728 and one or more memory 734 storing software 740. The software 740 may comprise, for example, one or more of the following software options: client software 765, user interface software, server software, database software, etc.

Device 712 may also include a battery 750 or other power supply device, speaker 753, and one or more antennae 754. Device 712 may include user interface circuitry, such as user interface control 730. User interface control 730 may include controllers or adapters, and other circuitry, configured to receive input from or provide output to a keypad, touch screen, voice interface- for example via microphone 756, function keys, joystick, data glove, mouse and the like. The user interface circuitry and user interface software may be configured to facilitate user control of at least some functions of device 712 though use of a display 736. Display 736 may be configured to display at least a portion of a user interface of device 712. Additionally, the display may be configured to facilitate user control of at least some functions of the device (for example, display 736 could be a touch screen).

Software 740 may be stored within memory 734 to provide instructions to processor 728 such that when the instructions are executed, processor 728, device 712 and/or other components of device 712 are caused to perform various processes or methods, such as those described herein. The software may comprise machine executable instructions and data used by processor 728 and other components of computing device 712 may be stored in a storage facility such as memory 734 and/or in hardware logic in an integrated circuit, ASIC, etc. Software may include both applications and operating system software, and may include code segments, instructions, applets, pre-compiled code, compiled code, computer programs, program modules, engines, program logic, and combinations thereof.

Memory 734 may include any of various types of tangible machine-readable storage medium, including one or more of the following types of storage devices: read only memory (ROM) modules, random access memory (RAM) modules, magnetic tape, magnetic discs (for example, a fixed hard disk drive or a removable floppy disk), optical disk (for example, a CD-ROM disc, a CD-RW disc, a DVD disc), flash memory, and EEPROM memory. As used herein (including the claims), a tangible or non-transitory machine-readable storage medium is a physical structure that may be touched by a human. A signal would not by itself constitute a tangible or non-transitory machine-readable storage medium, although other embodiments may include signals or ephemeral versions of instructions executable by one or more processors to carry out one or more of the operations described herein.

As used herein, processor 728 (and any other processor or computer described herein) may include any of various types of processors whether used alone or in combination with executable instructions stored in a memory or other computer-readable storage medium. Processors should be understood to encompass any of various types of computing structures including, but not limited to, one or more microprocessors, special-purpose computer chips, field-programmable gate arrays (FPGAs), controllers, application-specific integrated circuits (ASICs), combinations of hardware/firmware/software, or other special or general-purpose processing circuitry.

As used in this application, the term 'circuitry' may refer to any of the following: (a) hardware-only circuit implementations (such as implementations in only analog and/or digital circuitry) and (b) combinations of hardware circuits and software (and/or firmware), such as (as applicable): (i) a combination of processor(s) or (ii) portions of processor(s)/software (including digital signal processor(s)), software, and memory(ies) that work together to cause an apparatus, such as a mobile phone or server, to perform various functions) and (c) hardware circuits, such as a microprocessor(s) or a portion of a microprocessor(s), that require software or firmware for operation, even if the software or firmware is not physically present.

These examples of 'circuitry' apply to all uses of this term in this application, including in any claims. As an example, as used in this application, the term "circuitry" would also cover an implementation of merely a processor (or multiple processors) or portion of a processor and its (or their) accompanying software and/or firmware. The term "circuitry" would also cover, for example, a baseband integrated circuit or applications processor integrated circuit for a mobile phone or a similar integrated circuit in a server, a cellular network device, or other network device.

Device 712 may be configured to receive, decode and process various types of transmissions including transmissions in Wi-Fi networks according to a wireless local area network (e.g., the IEEE 802.11 WLAN standards 802.11n, 802.11ac, etc.) and/or wireless metro area network (WMAN) standards (e.g., 802.16), through a specific one or more WLAN transceivers 743, one or more WMAN transceivers 741. Additionally or alternatively, device 712 may be configured to receive, decode and process transmissions through various other transceivers, such as FM/AM Radio transceiver 742, and telecommunications transceiver 744 (e.g., cellular network receiver such as CDMA, GSM, 4G LTE, 5G, etc.).

The device 712 may include one or more additional network interfaces, such as the V2V network interfaces and V2N network interfaces described in connection with Figs. 1 and 2. Device 712 or its various components may be mobile (e.g., user equipment), or incorporated into a larger mobile apparatus (e.g., a vehicle). The device 712 or its various components may be incorporated into any of the communication stations described throughout this disclosure. For example, the device 712 may be incorporated the communication station equipment 111 described in connection with Fig. 1 (e.g., the controller 725 of device 712 may be configured to operate as the computing resources 112 and the database 114; the display may be configured to operate as the display resources of the display and adaptive resources 115 described in connection with Fig. 1). Moreover, device 712 may include any of the sensors 117 and/or the adaptive resources of the display and adaptive resources 115 described in connection with Fig. 1.

Other devices or systems may include the same or similar components and perform the same or similar functions and methods. For example, a computer communicating over a wired network connection (for example, server 140 of Figs. 1 and 2) may include the components or a subset of the components described above, and may be configured to perform the same or similar functions as device 712 and its components. Further access points as described herein may include the components, a subset of the components, or a multiple of the components (e.g., integrated in one or more servers) configured to perform the steps, described herein.

## Claims

1. A method comprising:
receiving (601), by a computing device and from a first communication station via vehicle-to-network, V2N, communication, a vehicle-to-everything, V2X, message;
determining (603), by the computing device and based on the V2X message, one or more V2X quality of service, QoS, measurements, wherein the V2X QoS measurements include measurements based on V2V links;
determining (605) whether a QoS target is satisfied for a V2V link between the first communication station and a second communication station based on the V2X QoS measurements;
storing (607) an indication that V2N message forwarding is enabled between the first communication station and the second communication station when the QoS target is not satisfied for the V2V link;
determining (611), by the computing device, at least one communication station to forward the V2X message based on V2N message forwarding information and / or V2X QoS information;
generating (613) a forwarded version of the V2X message;
sending (613), by the computing device and to the at least one communication station via V2N communication, the forwarded version of the V2X message, wherein the forwarded version of the V2X message includes the one or more V2X QoS measurements.

2. The method of claim 1, comprising
generating a returned version of the V2X message; and
sending (409), by the computing device and to the first communication station via V2N communication, the returned version of the V2X message;
wherein the returned version of the V2X message includes the one or more V2X QoS measurements.

3. The method of claim 2, wherein the V2X message includes a first timestamp determined by the first communication station, and
wherein the returned version of the V2X message includes a server identifier, a second timestamp determined by the computing device, a timestamp echo that indicates the first timestamp, and a server processing time for the V2X message.

4. The method of any one of claims 1-3, wherein the one or more V2X QoS measurements includes a round-trip time associated with the first communication station, an indication of a delay associated with the first communication station, or an indication of a V2X message loss associated with the V2X message.

5. The method of any one of claims 1-4, further comprising:
based on a determination that the QoS target is not satisfied, storing, by the computing device, an indication that vehicle-to-network message forwarding is disabled between the first communication station and the second communication station.

6. The method of any one of claims 1-5, further comprising:
determining, by the first communication station, a one-way delay between the first communication station and the second communication station;
determining, by the first communication station, a directional loss between the first communication station and the second communication station;
determining, by the first communication station, a round-trip time between the first communication station and the second communication station;
sending, by the first communication station to one or more other communication stations and/or to the computing device, within one or more V2X messages, an indication of the one-way delay between the first communication station and the second communication station, an indication of the directional loss between the first communication station and the second communication station, and an indication of the round-trip time between the first communication station and the second communication station.

7. An apparatus comprising:
one or more processors; and
memory storing executable instructions that, when executed by the one or more processors, cause the apparatus to at least:
receive (601), from a first communication station via vehicle-to-network, V2N, communication, a vehicle-to-everything, V2X, message;
determine (603), based on the V2X message, one or more V2X quality of service, QoS, measurements, wherein the V2X QoS measurements include measurements based on V2V links;
determine (605) whether a QoS target is satisfied for a V2V link between the first communication station and a second communication station based on the V2X QoS measurements;
store (607) an indication that V2N message forwarding is enabled between the first communication station and the second communication station when the QoS target is not satisfied for the V2V link;
determine (611) at least one communication station to forward the V2X message based on V2N message forwarding information and / or V2X QoS information;
generate a forwarded version of the V2X message;
send (613), to the at least one communication station via V2N communication, the forwarded version of the V2X message, wherein the forwarded version of the V2X message includes the one or more V2X QoS measurements.

8. The apparatus of claim 7, wherein the executable instructions, when executed by the one or more processors, cause the apparatus to
generate a returned version of the V2X message; and
send, to the first communication station, the returned version of the V2X message;
wherein the returned version of the V2X message includes the one or more V2X QoS measurements.

9. The apparatus of claim 8, wherein the V2X message includes a first timestamp determined by the first communication station, and
wherein the returned version of the V2X message includes a server identifier, a second timestamp determined by the apparatus, a timestamp echo that indicates the first timestamp, and a server processing time for the V2X message.

10. The apparatus of any one of claims 7-9, wherein the one or more V2X QoS measurements includes a round-trip time associated with the first communication station, an indication of a delay associated with the first communication station, or an indication of a V2X message loss associated with the V2X message.

11. The apparatus of any one of claims 7-10, wherein the executable instructions, when executed by the one or more processors, cause the apparatus to:
based on a determination that the QoS target is not satisfied, store an indication that vehicle-to-network message forwarding is disabled between the first communication station and the second communication station.

12. The apparatus of any one of claims 7-11, wherein the executable instructions, when executed by the one or more processors, cause the apparatus to:
receive, from the first communication station, an indication of a one-way delay between the first communication station and the second communication station;
receive, from the first communication station, an indication of a directional loss between the first communication station and the second communication station; and
receive, from the first communication station, a round-trip time between the first communication station and the second communication station.

13. One or more computer-readable media storing executable instructions that, when executed, cause an apparatus to:
receive (601), from a first communication station via vehicle-to-network, V2N, communication, a vehicle-to-everything, V2X, message;
determine (603), based on the V2X message, one or more V2X quality of service, QoS, measurements, wherein the V2X QoS measurements include measurements based on V2V links;
determine (605) whether a QoS target is satisfied for a V2V link between the first communication station and a second communication station based on the V2X QoS measurements;
store (607) an indication that V2N message forwarding is enabled between the first communication station and the second communication station when the QoS target is not satisfied for the V2V link;
determine (611) at least one communication station to forward the V2X message based on V2N message forwarding information and / or V2X QoS information;
generate a forwarded version of the V2X message;
send (613), to the at least one communication station via V2N communication, the forwarded version of the V2X message, wherein the forwarded version of the V2X message includes the one or more V2X QoS measurements.

## Patentansprüche

1. Verfahren, das Folgendes umfasst:
Empfangen (601) einer Fahrzeug-zu-allem(V2X)-Nachricht durch eine Datenverarbeitungsvorrichtung via eine Fahrzeug-zu-Netzwerk(V2N)-Kommunikation von einer ersten Kommunikationsstation;
Bestimmen (603) von einer oder mehreren V2X-Dienstqualitäts(QoS)-Messungen durch die Datenverarbeitungsvorrichtung auf Basis der V2X-Nachricht, wobei die V2X-QoS-Messungen Messungen auf Basis von V2V-Verbindungen beinhalten;
Bestimmen (605) auf Basis der V2X-QoS-Messungen, ob für eine V2V-Verbindung zwischen der ersten Kommunikationsstation und einer zweiten Kommunikationsstation ein QoS-Ziel erfüllt ist;
Speichern (607) einer Anzeige, dass eine V2N-Nachrichtenweiterleitung zwischen der ersten Kommunikationsstation und der zweiten Kommunikationsstation aktiviert ist, wenn das QoS-Ziel für die V2V-Verbindung nicht erfüllt ist;
Bestimmen (611) von mindestens einer Kommunikationsstation zum Weiterleiten der V2X-Nachricht durch die Datenverarbeitungsvorrichtung auf Basis von V2N-Nachrichtenweiterleitungsinformationen und/oder V2X-QoS-Informationen;
Erzeugen (613) einer weitergeleiteten Version der V2X-Nachricht;
Senden (613) der weitergeleiteten Version der V2X-Nachricht durch die Datenverarbeitungsvorrichtung via V2N-Kommunikation an mindestens eine Kommunikationsstation, wobei die weitergeleitete Version der V2X-Nachricht die eine oder die mehreren V2X-QoS-Messungen beinhaltet.

2. Verfahren nach Anspruch 1, das Folgendes umfasst
Erzeugen einer zurückgegebenen Version der V2X-Nachricht; und
Senden (409) der zurückgegebenen Version der V2X-Nachricht durch die Datenverarbeitungsvorrichtung via V2N-Kommunikation an die erste Kommunikationsstation;
wobei die zurückgegebene Version der V2X-Nachricht die eine oder die mehreren V2X-QoS-Messungen beinhaltet.

3. Verfahren nach Anspruch 2, wobei die V2X-Nachricht einen ersten Zeitstempel beinhaltet, der von der ersten Kommunikationsstation bestimmt wird, und
wobei die zurückgegebene Version der V2X-Nachricht eine Serverkennung, einen zweiten Zeitstempel, der von der Datenverarbeitungsvorrichtung bestimmt wird, ein Zeitstempelecho, das den ersten Zeitstempel anzeigt, und eine Serververarbeitungszeit für die V2X-Nachricht beinhaltet.

4. Verfahren nach einem der Ansprüche 1 bis 3, wobei die eine oder die mehreren V2X-QoS-Messungen eine Umlaufzeit, die mit der ersten Kommunikationsstation verknüpft ist, eine Anzeige einer Verzögerung, die mit der ersten Kommunikationsstation verknüpft ist, oder eine Anzeige eines V2X-Nachrichtenverlusts, der mit der V2X-Nachricht verknüpft ist, beinhalten.

5. Verfahren nach einem der Ansprüche 1 bis 4, das ferner Folgendes umfasst:
auf Basis einer Bestimmung, dass das QoS-Ziel nicht erfüllt ist, Speichern einer Anzeige, dass eine Fahrzeug-zu-Netzwerk-Nachrichtenweiterleitung zwischen der ersten Kommunikationsstation und der zweiten Kommunikationsstation deaktiviert ist, durch die Datenverarbeitungsvorrichtung.

6. Verfahren nach einem der Ansprüche 1 bis 5, das ferner Folgendes umfasst:
Bestimmen einer Einwegeverzögerung zwischen der ersten Kommunikationsstation und der zweiten Kommunikationsstation durch die erste Kommunikationsstation;
Bestimmen eines Richtungsverlusts zwischen der ersten Kommunikationsstation und der zweiten Kommunikationsstation durch die erste Kommunikationsstation;
Bestimmen einer Umlaufzeit zwischen der ersten Kommunikationsstation und der zweiten Kommunikationsstation durch die erste Kommunikationsstation;
Senden einer Anzeige der Einwegeverzögerung zwischen der ersten Kommunikationsstation und der zweiten Kommunikationsstation, einer Anzeige des Richtungsverlusts zwischen der ersten Kommunikationsstation und der zweiten Kommunikationsstation und einer Anzeige der Umlaufzeit zwischen der ersten Kommunikationsstation und der zweiten Kommunikationsstation durch die erste Kommunikationsstation in einer oder mehreren V2X-Nachrichten an eine oder mehrere andere Kommunikationsstationen und/oder an die Datenverarbeitungsvorrichtung.

7. Einrichtung, die Folgendes umfasst:
einen oder mehrere Prozessoren; und
einen Speicher, in dem ausführbare Anweisungen gespeichert sind, die, wenn sie von dem einen oder den mehreren Prozessoren ausgeführt werden, die Einrichtung mindestens zu Folgendem veranlassen:
Empfangen (601) einer Fahrzeug-zu-allem(V2X)-Nachricht via eine Fahrzeug-zu-Netzwerk(V2N)-Kommunikation von einer ersten Kommunikationsstation;
Bestimmen (603) von einer oder mehreren V2X-Dienstqualitäts(QoS)-Messungen auf Basis der V2X-Nachricht, wobei die V2X-QoS-Messungen Messungen auf Basis von V2V-Verbindungen beinhalten;
Bestimmen (605) auf Basis der V2X-QoS-Messungen, ob ein QoS-Ziel für eine V2V-Verbindung zwischen der ersten Kommunikationsstation und einer zweiten Kommunikationsstation erfüllt ist;
Speichern (607) einer Anzeige, dass eine V2N-Nachrichtenweiterleitung zwischen der ersten Kommunikationsstation und der zweiten Kommunikationsstation aktiviert ist, wenn das QoS-Ziel für die V2V-Verbindung nicht erfüllt ist;
Bestimmen (611) von mindestens einer Kommunikationsstation zum Weiterleiten der V2X-Nachricht auf Basis von V2N-Nachrichtenweiterleitungsinformationen und/oder V2X-QoS-Informationen;
Erzeugen einer weitergeleiteten Version der V2X-Nachricht;
Senden (613) der weitergeleiteten Version der V2X-Nachricht via V2N-Kommunikation an mindestens eine Kommunikationsstation, wobei die weitergeleitete Version der V2X-Nachricht die eine oder die mehreren V2X-QoS-Messungen beinhaltet.

8. Einrichtung nach Anspruch 7, wobei die ausführbaren Anweisungen, wenn sie von dem einen oder den mehreren Prozessoren ausgeführt werden, die Einrichtung zu Folgendem veranlassen
Erzeugen einer zurückgegebenen Version der V2X-Nachricht; und
Senden der zurückgegebenen Version der V2X-Nachricht an die erste Kommunikationsstation;
wobei die zurückgegebene Version der V2X-Nachricht die eine oder die mehreren V2X-QoS-Messungen beinhaltet.

9. Einrichtung nach Anspruch 8, wobei die V2X-Nachricht einen ersten Zeitstempel beinhaltet, der von der ersten Kommunikationsstation bestimmt wird, und
wobei die zurückgegebene Version der V2X-Nachricht eine Serverkennung, einen zweiten Zeitstempel, der von der Einrichtung bestimmt wird, ein Zeitstempelecho, das den ersten Zeitstempel anzeigt, und eine Serververarbeitungszeit für die V2X-Nachricht beinhaltet.

10. Einrichtung nach einem der Ansprüche 7 bis 9, wobei die eine oder die mehreren V2X-QoS-Messungen eine Umlaufzeit, die mit der ersten Kommunikationsstation verknüpft ist, eine Anzeige einer Verzögerung, die mit der ersten Kommunikationsstation verknüpft ist, oder eine Anzeige eines V2X-Nachrichtenverlusts, der mit der V2X-Nachricht verknüpft ist, beinhalten.

11. Einrichtung nach einem der Ansprüche 7 bis 10, wobei die ausführbaren Anweisungen, wenn sie von dem einen oder den mehreren Prozessoren ausgeführt werden, die Einrichtung zu Folgendem veranlassen:
auf Basis einer Bestimmung, dass das QoS-Ziel nicht erfüllt ist, Speichern einer Anzeige, dass eine Fahrzeug-zu-Netzwerk-Nachrichtenweiterleitung zwischen der ersten Kommunikationsstation und der zweiten Kommunikationsstation deaktiviert ist.

12. Einrichtung nach einem der Ansprüche 7 bis 11, wobei die ausführbaren Anweisungen, wenn sie von dem einen oder den mehreren Prozessoren ausgeführt werden, die Einrichtung zu Folgendem veranlassen:
Empfangen einer Anzeige einer Einwegeverzögerung zwischen der ersten Kommunikationsstation und der zweiten Kommunikationsstation von der ersten Kommunikationsstation;
Empfangen einer Anzeige eines Richtungsverlusts zwischen der ersten Kommunikationsstation und der zweiten Kommunikationsstation von der ersten Kommunikationsstation; und
Empfangen einer Umlaufzeit zwischen der ersten Kommunikationsstation und der zweiten Kommunikationsstation von der ersten Kommunikationsstation.

13. Ein oder mehrere computerlesbare Medien, auf denen ausführbare Anweisungen gespeichert sind, die, wenn sie ausgeführt werden, die Einrichtung zu Folgendem veranlassen:
Empfangen (601) einer Fahrzeug-zu-allem(V2X)-Nachricht via eine Fahrzeug-zu-Netzwerk(V2N)-Kommunikation von einer ersten Kommunikationsstation;
Bestimmen (603) von einer oder mehreren V2X-Dienstqualitäts(QoS)-Messungen auf Basis der V2X-Nachricht, wobei die V2X-QoS-Messungen Messungen auf Basis von V2V-Verbindungen beinhalten;
Bestimmen (605) auf Basis der V2X-QoS-Messungen, ob ein QoS-Ziel für eine V2V-Verbindung zwischen der ersten Kommunikationsstation und einer zweiten Kommunikationsstation erfüllt ist;
Speichern (607) einer Anzeige, dass eine V2N-Nachrichtenweiterleitung zwischen der ersten Kommunikationsstation und der zweiten Kommunikationsstation aktiviert ist, wenn das QoS-Ziel für die V2V-Verbindung nicht erfüllt ist;
Bestimmen (611) von mindestens einer Kommunikationsstation zum Weiterleiten der V2X-Nachricht auf Basis von V2N-Nachrichtenweiterleitungsinformationen und/oder V2X-QoS-Informationen;
Erzeugen einer weitergeleiteten Version der V2X-Nachricht;
Senden (613) der weitergeleiteten Version der V2X-Nachricht via V2N-Kommunikation an mindestens eine Kommunikationsstation, wobei die weitergeleitete Version der V2X-Nachricht die eine oder die mehreren V2X-QoS-Messungen beinhaltet.

## Revendications

1. Procédé comprenant :
la réception (601) d'un message de véhicule-à-tout, V2X, par un dispositif informatique et à partir d'une première station de communication via une communication de véhicule à réseau, V2N ;
la détermination (603) d'une ou plusieurs mesures de qualité de service, QoS, V2X, par le dispositif informatique et sur la base du message V2X, dans lequel les mesures QoS V2X comportent des mesures basées sur les liaisons V2V ;
la détermination (605) précisant si un objectif QoS est satisfait pour une liaison V2V entre la première station de communication et une deuxième station de communication sur la base des mesures QoS V2X ;
le stockage (607) d'une indication selon laquelle un transfert de message V2N est activé entre la première station de communication et la deuxième station de communication lorsque l'objectif QoS n'est pas satisfait pour la liaison V2V ;
la détermination (611), par le dispositif informatique, d'au moins une station de communication pour transférer le message V2X sur la base d'informations de transfert de message V2N et/ou d'informations QoS V2X ;
la génération (613) d'une version transférée du message V2X ;
l'envoi (613) de la version transférée du message V2X par le dispositif informatique et à l'au moins une station de communication via une communication V2N, dans lequel la version transférée du message V2X comporte les une ou plusieurs mesures QoS V2X.

2. Procédé selon la revendication 1, comprenant
la génération d'une version retournée du message V2X ; et
l'envoi (409) de la version retournée du message V2X par le dispositif informatique et à la première station de communication via une communication V2N ;
dans lequel la version retournée du message V2X comporte les une ou plusieurs mesures QoS V2X.

3. Procédé selon la revendication 2, dans lequel le message V2X comporte un premier horodatage déterminé par la première station de communication, et
dans lequel la version retournée du message V2X comporte un identifiant de serveur, un deuxième horodatage déterminé par le dispositif informatique, un écho d'horodatage qui indique le premier horodatage et un temps de traitement de serveur pour le message V2X.

4. Procédé selon l'une des revendications 1 à 3, dans lequel les une ou plusieurs mesures QoS V2X comportent un temps aller-retour associé à la première station de communication, une indication d'un retard associé à la première station de communication ou une indication d'une perte de message V2X associée au message V2X.

5. Procédé selon l'une des revendications 1 à 4, comprenant en outre :
en déterminant que l'objectif QoS n'est pas satisfait, le stockage, par le dispositif informatique, d'une indication selon laquelle le transfert de message de véhicule à réseau est désactivé entre la première station de communication et la deuxième station de communication.

6. Procédé selon l'une des revendications 1 à 5, comprenant en outre :
la détermination, par la première station de communication, d'un retard unidirectionnel entre la première station de communication et la deuxième station de communication ;
la détermination, par la première station de communication, d'une perte directionnelle entre la première station de communication et la deuxième station de communication ;
la détermination, par la première station de communication, d'un temps aller-retour entre la première station de communication et la deuxième station de communication ;
l'envoi dans un ou plusieurs messages V2X, par la première station de communication à une ou plusieurs autres stations de communication et/ou au dispositif informatique, d'une indication du retard unidirectionnel entre la première station de communication et la deuxième station de communication, d'une indication de la perte directionnelle entre la première station de communication et la deuxième station de communication, et d'une indication du temps aller-retour entre la première station de communication et la deuxième station de communication.

7. Appareil comprenant :
un ou plusieurs processeurs ; et
une mémoire stockant des instructions exécutables qui, lorsqu'elles sont exécutées par les un ou plusieurs processeurs, amènent l'appareil au moins :
à recevoir (601) un message de véhicule-à-tout, V2X, à partir d'une première station de communication via une communication de véhicule à réseau, V2N ;
à déterminer (603) une ou plusieurs mesures de qualité de service, QoS, V2X, sur la base du message V2X, dans lequel les mesures QoS V2X comportent des mesures basées sur les liaisons V2V ;
à déterminer (605) si un objectif QoS est satisfait pour une liaison V2V entre la première station de communication et une deuxième station de communication sur la base des mesures QoS V2X ;
à stocker (607) une indication selon laquelle un transfert de message V2N est activé entre la première station de communication et la deuxième station de communication lorsque l'objectif QoS n'est pas satisfait pour la liaison V2V ;
à déterminer (611) au moins une station de communication pour transférer le message V2X sur la base d'informations de transfert de message V2N et/ou d'informations QoS V2X ;
à générer une version transférée du message V2X ;
à envoyer (613) la version transférée du message V2X à l'au moins une station de communication via une communication V2N, dans lequel la version transférée du message V2X comporte les une ou plusieurs mesures QoS V2X.

8. Appareil selon la revendication 7, dans lequel les instructions exécutables, lorsqu'elles sont exécutées par les un ou plusieurs processeurs, amènent l'appareil :
à générer une version retournée du message V2X ; et
à envoyer la version retournée du message V2X à la première station de communication ;
dans lequel la version retournée du message V2X comporte les une ou plusieurs mesures QoS V2X.

9. Appareil selon la revendication 8, dans lequel le message V2X comporte un premier horodatage déterminé par la première station de communication, et
dans lequel la version retournée du message V2X comporte un identifiant de serveur, un deuxième horodatage déterminé par l'appareil, un écho d'horodatage qui indique le premier horodatage et un temps de traitement de serveur pour le message V2X.

10. Appareil selon l'une des revendications 7 à 9, dans lequel les une ou plusieurs mesures QoS V2X comportent un temps aller-retour associé à la première station de communication, une indication d'un retard associé à la première station de communication ou une indication d'une perte de message V2X associée au message V2X.

11. Appareil selon l'une des revendications 7 à 10, dans lequel les instructions exécutables, lorsqu'elles sont exécutées par les un ou plusieurs processeurs, amènent l'appareil :
en déterminant que l'objectif QoS n'est pas satisfait, à stocker une indication selon laquelle le transfert de message de véhicule à réseau est désactivé entre la première station de communication et la deuxième station de communication.

12. Appareil selon l'une des revendications 7 à 11, dans lequel les instructions exécutables, lorsqu'elles sont exécutées par les un ou plusieurs processeurs, amènent l'appareil :
à recevoir de la première station de communication une indication d'un retard unidirectionnel entre la première station de communication et la deuxième station de communication ;
à recevoir de la première station de communication une indication d'une perte directionnelle entre la première station de communication et la deuxième station de communication ; et
à recevoir de la première station de communication un temps aller-retour entre la première station de communication et la deuxième station de communication.

13. Support ou plusieurs supports lisible(s) par ordinateur stockant des instructions exécutables qui, lorsqu'elles sont exécutées, amènent un appareil :
à recevoir (601) un message de véhicule-à-tout, V2X, à partir d'une première station de communication via une communication de véhicule à réseau, V2N ;
à déterminer (603) une ou plusieurs mesures de qualité de service, QoS, V2X, sur la base du message V2X, dans lequel les mesures QoS V2X comportent des mesures basées sur les liaisons V2V ;
à déterminer (605) si un objectif QoS est satisfait pour une liaison V2V entre la première station de communication et une deuxième station de communication sur la base des mesures QoS V2X ;
à stocker (607) une indication selon laquelle un transfert de message V2N est activé entre la première station de communication et la deuxième station de communication lorsque l'objectif QoS n'est pas satisfait pour la liaison V2V ;
à déterminer (611) au moins une station de communication pour transférer le message V2X sur la base d'informations de transfert de message V2N et/ou d'informations QoS V2X ;
à générer une version transférée du message V2X ;
à envoyer (613) la version transférée du message V2X à l'au moins une station de communication via une communication V2N, dans lequel la version transférée du message V2X comporte les une ou plusieurs mesures QoS V2X.
